(19) Europäisches Patentamt
European Patent Office
Office européen des brevets

(11) EP 4 557 236 B1

(12) EUROPEAN PATENT SPECIFICATION

(45) Date of publication and mention of the grant of the patent:
**18.03.2026 Bulletin 2026/12**

(21) Application number: **24212491.5**

(22) Date of filing: **12.11.2024**

(51) International Patent Classification (IPC):
***G06V 10/774*** *(2022.01)* ***G06V 10/82*** *(2022.01)*
***G06V 20/40*** *(2022.01)*

(52) Cooperative Patent Classification (CPC):
**G06V 10/82; G06V 10/774; G06V 20/41**

(54) **A MACHINE LEARNING METHOD FOR ACTION RECOGNITION**

MASCHINENLERNVERFAHREN ZUR AKTIONSERKENNUNG

PROCÉDÉ D'APPRENTISSAGE AUTOMATIQUE POUR LA RECONNAISSANCE D'ACTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.11.2023 GR 20230100947**

(43) Date of publication of application:
**21.05.2025 Bulletin 2025/21**

(73) Proprietor: **Samsung Electronics Co., Ltd.**
**Suwon-si, Gyeonggi-do 16677 (KR)**

(72) Inventors:
- **BULAT, Adrian**
  **Chertsey, KT16 0RS (GB)**
- **OUALI, Yassine**
  **Chertsey, KT16 0RS (GB)**
- **TZIMIROPOULOS, Georgios**
  **Chertsey, KT16 0RS (GB)**
- **MORENO, Ricardo Guerrero**
  **Chertsey, KT16 0RS (GB)**
- **ALONSO, Brais Martinez**
  **Chertsey, KT16 0RS (GB)**
- **ZAGANIDIS, Anestis**
  **Chertsey, KT16 0RS (GB)**
- **RAINEY, Jay**
  **Chertsey, KT16 0RS (GB)**

(74) Representative: **Appleyard Lees IP LLP**
**G Mill**
**Dean Clough Industrial Park**
**Halifax HX3 5AH (GB)**

(56) References cited:
- **YI WANG ET AL: "InternVid: A Large-scale Video-Text Dataset for Multimodal Understanding and Generation", ARXIV.ORG, CORNELL UNIVERSITY LIBRARY, 201 OLIN LIBRARY CORNELL UNIVERSITY ITHACA, NY 14853, 13 July 2023 (2023-07-13), XP091562382**
- **CHRISTOPH SCHUHMANN ET AL: "LAION-5B: An open large-scale dataset for training next generation image-text models", ARXIV.ORG, CORNELL UNIVERSITY LIBRARY, 201 OLIN LIBRARY CORNELL UNIVERSITY ITHACA, NY 14853, 16 October 2022 (2022-10-16), XP091345635**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 557 236 B1

## Description

### Field

The present application generally relates to a method for performing action recognition in images or videos. In particular, the present application provides a method for generating a training dataset suitable for training a vision-language, VL, machine learning, ML, model for performing action recognition.

### Background

Following the introduction of CLIP (Contrastive Language-Image Pre-Training), large-scale pre-training of Vision-Language (VL) models has been shown to be instrumental not only for multi-modal understanding (e.g. image captioning, VQA, text-based retrieval, etc.) but also in traditional vision tasks such as object detection and action recognition. Thanks to their training on billions of image-text pairs, VL contrastive models have exhibited remarkable zeroand few-shot capabilities on a very wide spectrum of tasks and datasets. However, the current trend in VL pre-training is to scale up training datasets and model sizes, which requires significant computational resources during both training and inference.

Yi Wang et al "InternVid: A Large-scale Video-Text Dataset for Multimodal Understanding and Generation" discloses InternVid, a large-scale video-centric multimodal dataset comprising over 7 million videos with corresponding textual descriptions, and a video-text model (ViCLIP) trained thereon via contrastive learning for improved video-language representation and zero-shot recognition performance.

Christoph Schuhmann et al "LAION-5B: An open large-scale dataset for training next generation image-text models" discloses LAION-5B, an open dataset of 5.85 billion CLIP-filtered image-text pairs enabling large-scale training and fine-tuning of multimodal models such as CLIP, GLIDE, and Stable Diffusion.

The present applicant has therefore identified the need for an improved method for performing vision tasks such as action recognition.

### Summary

In a first approach of the present techniques, there is provided a computer-implemented method for generating a training dataset for training a vision-language machine learning, ML, model to perform action recognition, the method comprising: generating a taxonomy of human activities, wherein the taxonomy comprises a plurality of human activity types that are organised into a hierarchy; generating, for each human activity type of the plurality of human activity types in the taxonomy, a set of textual queries; retrieving, from a multi-modal dataset, a plurality of image-text pairs using the generated set of textual queries, wherein the image in each image-text pair depicts a specific human activity type and the text in each image-text pair represents a caption for the image; generating at least one additional caption for each image of the retrieved image-text pairs; and combining, for each retrieved image-text pair, the generated at least one additional caption with the image-text pair, and thereby generating the training dataset.

A vision-language ML model is a type of multimodal model that fuses a vision model with a natural language model. A vision-language, VL, model can learn from images and text, can process both images and text, and can be used to tackle many tasks, such as visual question answering (i.e. answering questions about an image), to image classification (i.e. labelling images with text labels), to image captioning (i.e. describing an image). VL models are generative models which take image and/or text inputs, and generate text outputs. VL models typically have three key elements: an image encoder, a text encoder, and a strategy to fuse together information from the two encoders.

Advantageously, the present techniques provide a way to generate a dataset that enables a vision-language machine-learning, ML, model to specifically perform action recognition. The present dataset is specifically tailored to the space of human actions. The human actions are based on a human action-centric taxonomy, i.e. a hierarchy of human activities or actions. For example, the taxonomy may be a tree structure of human activities. One node of the tree structure may be "leisure", which relates to activities humans perform for leisure. A branch from the leisure node may lead to a "sport" node, and a branch from the sport node may lead to a "football" node. The football node may itself lead to other nodes, such as "indoor", "outdoor", "five-a-side", "American", "English", and so on. Thus, human activities can be broken down into high-level categories ("leisure", "physical", "professional", "creative", etc.) and each high-level category can be broken down into sub-categories. It will be understood that the precise structure of the taxonomy itself may take any suitable form. Once this taxonomy has been generated, it can be used to generate thousands of related text queries, which can be used to obtain relevant image-text pairs from existing image-text datasets. That is, the taxonomy and generated text queries enables relevant, human action-specific image-text pairs from existing image-text datasets. These human action-specific image-text pairs can then be augmented with additional captions, to form a training dataset that enables a vision-language ML model to be trained specifically for action recognition.

The method to generate a training dataset may be performed by a server or other electronic device with sufficient computational resource (memory, processor power, etc.)

The step of generating a taxonomy of human activities comprises generating, using a large language model, LLM, the plurality of human activity types; and organising, using the LLM, the generated plurality of human activity types into a hierarchy. Any suitable LLM may be used for this, such as, but not limited to, a generative pre-trained transformer, GPT, model. Advantageously therefore, the present techniques harness knowledge of a powerful LLM to generate the taxonomy.

The method may further comprise: obtaining at least one category of human activity types; and prompting, using the obtained at least one category, the LLM to generate the plurality of human activity types. That is, the method uses seeds to help the LLM to generate a plurality of human activity types which are then to be organised into a hierarchy. The categories may include, for example, "physical", "communication and cognitive", "leisure", "emotional", "domestic, health and self-care", and "creative and professional". For example, a taxonomy based on a tree structure may have "activity" as a root node, and the categories as nodes which are broad classes of activity. Each category then branches off based on the specific types of activity (e.g. playing sport), and each type of activity may be associated with one or more subtypes of activity (e.g. playing football, playing tennis, etc). It will be understood that these are example categories and the taxonomy may be generated by seeding the LLM with additional or alternative categories. Obtaining at least one category of human activity types may comprise obtaining the at least one category from a human. In other cases, the at least one category may be obtained from an LLM using an appropriate prompt.

For each category, the LLM may be iteratively prompted to create an initial, but exhaustive, list of coarse-grained examples of each category. A number of prompting strategies may be used.

For example, prompting the LLM may comprise: prompting the LLM to generate a list of popular human activity types for each category of the obtained at least one category. That is, the LLM may be prompted to generate the most popular and representative activities in each category. This prompting may be considered "list seeding".

In another example, prompting the LLM may comprise: prompting, using each letter of an alphabet, the LLM to generate a list of human activity types for each category of the obtained at least one category. That is, the LLM may be prompted to generate human-centric activities in alphabetic order, starting with a different letter of the alphabet each time. In one case, the LLM may be prompted in English, and the alphabet may therefore be the English alphabet. However, it will be understood that the specific language and alphabet used is non-limiting. This prompting may be considered "alphabetic listing".

In another example, prompting the LLM may further comprise: prompting the LLM to generate at least one synonym for each generated human activity type in the list. That is, for each activity generated via the prompting, the LLM may be prompted to generate a limited list of synonyms that describe the activity or are related to the activity. This prompting may be considered "synonym listing".

Prompting the LLM to generate at least one synonym may comprise prompting the LLM to generate a pre-defined maximum number of synonyms for each generated human activity type. This may ensure that the LLM only generates a limited list of synonyms, which are more likely to be focussed or close to the original activity type.

After the coarse-grained instances have been generated, further prompting of the LLM may take place to generate fine-grained categories. A number of prompting strategies may be used for this.

For example, prompting the LLM to generate the fine-grained categories may comprise: prompting the LLM to generate, for each activity verb in a set of activity verbs, at least one human activity type that is composed of the activity verb. That is, given an activity verb, the LLM may be prompted to generate a list of activities that can be composed of the verb. For example, the verb "making" may result in "making a cake", "making a bed", "making money", etc. This type of prompting may be considered "verb composition". The activity verbs may be generated by a human, or by an LLM using appropriate prompts.

In another example, prompting the LLM to generate the fine-grained categories may comprise: prompting the LLM to generate at least one sub-type activity for each generated human activity type. That is, given an activity, the LLM may be prompted to generate a list of related fine-grained activities. For example, the activity "playing football" may lead to sub-types of the activity, such as "playing American football", "playing soccer", "playing five-a-side" etc. This prompting process may be repeated iteratively if the generated activities can be further expanded. This type of prompting may be considered "sub-category listing".

The method may comprise adding activities from other sources to the list of activities generated by the LLM, to ensure the taxonomy is exhaustive or thorough.

Once the list of activities have been generated, the method may further comprise: removing duplicate and near-duplicates from the generated plurality of human activity types. Near duplicates may be those having a similarity (e.g. cosine similarity) above a threshold value. This ensures that the taxonomy is well-structured and organised, which makes retrieving image-text pairs more efficient. In one example, the list of human activities contains ~9.7K keywords.

For each keyword/human activity, a set of textual queries is generated. Two techniques may be used to generate the textual queries. The textual queries are natural language queries designed to represent real-world scenarios that involve each human activity. The textual queries also enable a multi-modal dataset to be queried so that relevant image-text pairs can be extracted from the dataset. For example, simply querying the database using the word "football" may generate too many irrelevant results, which show balls, show football matches, football pitches, football stadiums, etc. In contrast, a query like "a photo of a person playing football" or "an image of a person watching a football match" may generate more relevant results that represent the human activity in the query.

One technique involves using pre-defined templates. That is, generating, for each human activity type of the plurality of human activity types in the taxonomy, a set of textual queries may comprise: generating the set of textual queries by combining each human activity type of the plurality of human activity types with a template from a set of pre-defined query templates. The templates are natural language phrases into which activity types can be inserted, and may take the following example form: "a photo of a person [keyword]". Thus, many queries can be generated using such templates, by inserting the generated human activity types for the [keyword]. Thus, a vast number of textual queries may be generated as each human activity type may be combined with each template.

Another technique involves further prompting the LLM to generate set of descriptive and diverse phrases that represent real-world scenarios involving the specified activity. That is, generating, for each human activity type of the plurality of human activity types in the taxonomy, a set of textual queries may comprise: prompting, for each human activity type, the LLM to generate a textual phrase that represents a scenario involving the human activity type.

The generated textual queries may be used to query an existing database / dataset, to thereby extract relevant entries. In one example, the multi-modal dataset may be LAION-5B, which is a dataset comprising image-text pairs, where the text is a caption for the associated image. A multi-modal dataset is one which combines multiple data types or formats, such as text, images, audio and video, and provide richer understanding of content and enable multimodal models to be trained. For example, the LAION-5B is an image-text dataset.

Thus, retrieving, from a multi-modal dataset, a plurality of image-text pairs using the generated set of textual queries may comprise, for each textual query: generating an embedding vector for the textual query; and retrieving, from the multi-modal dataset, at least one image, where the at least one image has an embedding vector that is similar to the embedding vector of the textual query. An embedding vector is a real-valued vector that encodes the meaning or key features of an item of data (e.g. image, text, etc.) In other words, the textual queries are used to query the multi-modal dataset by retrieving images with a cosine similarity (above a threshold) between an embedding of the input textual query and an embedding of image in the dataset. In one example where LAION-5B is queried, 256M unique image-text samples were retrieved. (LAION-5B provides image URLs together with a text caption for each image. The URLs can be used to download the images from the dataset, thereby providing image-text pairs).

The method may further comprise: translating the text of the image-text pairs retrieved from the multi-modal dataset, so that all the text is in the same language. For example, non-English text captions may be translated into English using machine translation.

The method may further comprise: filtering the plurality of image-text pairs retrieved from the multi-modal dataset.

In one example, the filtering may comprise: applying a text complexity filter to remove image-text pairs that have text having a low complexity score. Thus, image-text pairs may be removed if their text captions are not sufficiently complex. An explanation of the complexity score is provided below.

Other types of filtering include filtering captions based on toxicity probability, and filtering images based on watermark and not safe for work, NSFW, probabilities.

As noted above, each retrieved image-text pair is augmented or enhanced with at least one additional caption. The step of generating at least one additional caption for each image of the retrieved image-text pairs may preferably occur after the filtering (and translating), because some remaining pairs may still have text that is irrelevant to the image or text that is incoherent.

Generating at least one additional caption for the image of each retrieved image-text pair comprises using a machine learning, ML, model to generate the at least one additional caption for the image. The ML model may be a Bootstrapping Language-Image Pre-training, BLIP, model.

In a second approach of the present techniques, there is provided a server for generating a training dataset for training a vision-language machine learning, ML, model to perform action recognition, the server comprising: at least one processor coupled to memory, for: generating a taxonomy of human activities, wherein the taxonomy organises a plurality of human activity types into a hierarchy; generating, for each human activity type of the plurality of human activity types in the taxonomy, a set of textual queries; retrieving, from a multi-modal dataset, a plurality of image-text pairs using the generated set of textual queries, wherein the image in each image-text pair depicts a specific human activity type and the text in each image-text pair represents a caption for the image; generating at least one additional caption for each image of the retrieved image-text pairs; and combining, for each retrieved image-text pair, the generated at least one additional caption to the image-text pair, and thereby generating the training dataset.

The features described above with respect to the first approach apply equally to the second approach and therefore, for the sake of conciseness, are not repeated.

As noted above, the server comprises at least one processor and memory. The memory may store instructions that, when executed by the at least one processor individually or collectively, cause the at least one processor to perform the above-described steps.

In a third approach of the present techniques, there is provided a computer-implemented method for training a vision-language machine learning, ML, model to perform action recognition, the method comprising: obtaining a vision-language ML model (which may comprise an image encoder and a text encoder); obtaining a training dataset generated using the methods described herein; and training the vision-language ML model to perform action recognition using the training dataset.

The vision-language ML model may be, or be based on, a Contrastive Language-Image Pre-Training, CLIP, model.

As explained in more detail below, during the generation of the additional captions for the image-text pairs, it is found that the generated captions may be generic and vague. This means that during training, randomly sampling between the generated captions and the original captions (i.e. as retrieved from the multi-modal dataset), degrades performance of the model being trained. To deal with this, a score-based sampling strategy may be employed. The training method may further comprise: calculating, for each image-text pair in the training dataset, a similarity score between the text of the image-text pair and the image of the image-text pair.

Then, training the vision-language ML model may comprise: sampling, for each image-text pair, either the text in the image-text pair or at least one additional caption associated with the image-text pair, based on the calculated similarity score; and training the vision-language ML model with the sampled text or at least one additional caption.

The vision-language ML model may be further trained using videos rather than just images. Thus, the training may further comprise: freezing a subset of parameters of the vision-language ML model following the training using the obtained training dataset; obtaining a further training dataset comprising a plurality of videos; and further training a remaining subset of parameters of the vision-language ML model using the further training dataset. This may enable the vision-language ML model to perform action recognition in videos as well as images.

In a fourth approach of the present techniques, there is provided a server for training a vision-language machine learning, ML, model to perform action recognition, the server comprising: at least one processor coupled to memory for: obtaining a vision-language ML model (which may comprise an image encoder and a text encoder); obtaining a training dataset generated using the methods described herein; and training the vision-language ML model to perform action recognition using the training dataset.

The features described above with respect to the third approach apply equally to the fourth approach and therefore, for the sake of conciseness, are not repeated.

As noted above, the server comprises at least one processor and memory. The memory may store instructions that, when executed by the at least one processor individually or collectively, cause the at least one processor to perform the above-described steps.

In a fifth approach of the present techniques, there is provided a computer-implemented method for using a trained vision-language machine learning, ML, model to perform an image-based and/or video-based task, the method comprising: receiving a user-input text query containing a human activity; processing the received user-input text query by the trained vision-language ML model; and performing, using the processing, an image-based and/or video-based task.

In one example, the task may be retrieving at least one image and/or video from a database of images and videos that depicts the human activity in the text query.

In another example, the task may be action recognition, and the trained model may be used to perform, for example, action recognition in images and/or videos in real-time or near-real time as they are being captured (which is useful for many scenarios, such as sports TV broadcasting, CCTV/security, etc.), image or video or video clip retrieval from a gallery/database, classifying images/videos captured by a user so they can be automatically turned into albums, natural language search of image/video databases, etc.

In a sixth approach of the present techniques, there is provided an electronic device for using a trained vision-language machine learning, ML, model to perform action recognition, the electronic device comprising: storage storing a database of images and videos; and at least one processor coupled to memory, for: receiving a user-input text query containing a human activity; processing the received user-input text query by the trained vision-language ML model; and retrieving, using the processing, at least one image or video from the database that depicts the human activity in the text query.

The features described above with respect to the fifth approach apply equally to the sixth approach and therefore, for the sake of conciseness, are not repeated.

As noted above, the electronic device comprises at least one processor and memory. The memory may store instructions that, when executed by the at least one processor individually or collectively, cause the at least one processor to perform the above-described steps.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/o may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

Brief description of the drawings

Implementations of the present techniques will now be described, by way of example only, with reference to the accompanying drawings, in which:

Figures 1A and 1B show plots of collected keywords and their distributions;
Figure 2 shows cosine similarities measured between image-text pairs of a randomly sampled batch;
Figures 3 and 4 show how the present model is both more data-efficient and more accurate than existing models;
Figure 5 is a table showing zero-shot image retrieval results in terms of R@1/R@10 retrieval accuracy on Flickr30k and MS-COCO;
Figure 6 is a table showing zero-shot video retrieval results in terms of R@1/R@10 retrieval accuracy on MSRVTT, MSVD and DiDemo;
Figures 7A and 7A show zero-shot classification results across a suite of action recognition datasets for, respectively, ViT-B/32 and ViT-B/16 models;
Figure 8 is a table showing zero-shot classification results on HMDB-51 and UCF-101 in terms of Top-1 (%) accuracy;
Figure 9 is a table showing few-shot classification results on HMDB-51, UCF-101 and Kinetics-400 in terms of Top-1 (%) accuracy for 2/4/8/16-shot;
Figure 10 is a table showing the effect of re-captioning;
Figure 11 is a table showing zero-shot results on UCF-101 and HMDB-51 with a ViT-B/32 for different numbers of image-text pairs;
Figure 12 is a table showing zero-shot results on UCF-101, HMDB-51 and K400 results without (1st row) and with the proposed LLM-based filtering (2nd row);
Figure 13 is a flowchart of example steps for generating a training dataset for training a vision-language machine learning, ML, model to perform action recognition;
Figure 14 is a flowchart of example steps for training a vision-language machine learning, ML, model to perform action recognition;
Figure 15 is a flowchart of example steps for using a trained vision-language machine learning, ML, model to perform action recognition; and
Figure 16 is a block diagram showing a server for generating a training dataset and training a VL ML model, and an electronic device for using a trained VL ML model.

Detailed description of the drawings

Broadly speaking, embodiments of the present techniques provide a method for generating a training dataset suitable for training a vision-language, VL, machine learning, ML, model for performing action recognition.

Vision-Language pre-training: This has emerged as the foremost approach for representation learning and training of robust zero-shot models. Based on the training objective, methods can be broadly placed into two categories: generative and contrastive, although, recently promising results were shown by approaches situated at their intersection.

From an architectural and training point of view, the present techniques closely follow CLIP and hence it is part of the contrastive family of models. Such models are trained using a contrastive loss with the goal of learning a joint embedding space for the two modalities (vision and language). Following CLIP, subsequent works seek to either improve the loss function, improve and increase the model size, and/or the dataset used. For example, DeCLIP introduces multi-view and nearest-neighbor supervision, FILIP applies the contrastive loss in a fine-grained manner while SigLIP replaces the contrastive loss with a sigmoid one. HiCLIP introduces hierarchical attention, while others improve the MLP heads of the architecture and the training scheduler.

In contrast to these existing works, the present techniques do not change the architecture or the training objective (loss) but propose domain-specific VL pre-training for obtaining highly discriminative and robust representations in a data-, training- and compute-efficient manner.

Dataset construction: This has very recently attracted the interest of the community that started to transition from huge noisy datasets to cleaner, higher quality ones. MetaCLIP attempts to recreate the collection process from the closed source dataset of CLIP by querying based on Wikipedia articles, bi-grams and WordNet data combined with a filtering and balancing process. DiHT introduces a rule-based system for retaining higher quality samples, while others performs data deduplication. Building on prior works, DataComp provides a unified framework that provides rule-based recipes for constructing datasets ranging in size from 12.8M to 12.8B. However, none of these approaches consider the case of domain-specific training. Moreover, they require manual/hand-crafted seeding of the data filtering, as opposed to the present LLM-based process. The present techniques significantly outperform all these methods while being up to an order of magnitude more data- and training-efficient.

As mentioned above, large-scale pre-training of Vision-Language (VL) models has been shown to be instrumental not only for multi-modal understanding (image captioning, visual question answering, text-based image/video retrieval, etc.) but also for traditional vision tasks such as image recognition, object detection, and video understanding (action recognition). However, the current trend in VL pre-training is to scale up training datasets and model sizes, which requires significant computational resources during both training and inference. Rather than following this trend, the present techniques pursue the opposite direction in order to answer the following question: *Is it possible to train a VL model that is more powerful than CLIP (and other variants) by constraining the domain of VL pre-training?*

Specifically, the goal of the present techniques is to develop, for the first time, a more data-, training- and compute-efficient and more accurate VL model by means of appropriate domain-specific VL pre-training. Due to its relevance in a number of important tasks/applications like action recognition and image/video retrieval, the present techniques focus on pre-training specialized to the space of human activities. The present work can be put together with recent works, which show that "improving the pre-training data" can actually be as or even more impactful than improving the algorithm for developing VL models. MetaCLIP uses queries based on Wikipedia articles, bi-grams, and WordNet combined with filtering and balancing. In a similar fashion, DiHT shows that simple filtering of the training data based on caption complexity improves the data efficiency of developing general-purpose VL models (models like CLIP). In contrast, the present techniques train a domain-specific VL model using an LLM-derived semantic domain for human activities as the basis for constructing the present dataset.

Existing works propose a training framework that alternates between data curation based on class information from the downstream task of interest (ImageNet classification) and training on that curated data. In contrast, the present techniques are not tuned to a specific dataset but cover the entire domain of human activities, which means the present techniques are applicable to multiple tasks (image/video retrieval, action recognition) and datasets (21 in total) without the need for an alternating training approach.

The present techniques make a number of contributions, including:

1. **HC-IT & HC-VL:** a *domain-specific* VL pre-training tailored to the space of human activities. To this end, the present techniques first propose to use an LLM to semiautomatically create a semantic domain of human activities consisting of thousands of activity-related queries. Using this query set, CLIP is used to retrieve the relevant image/text pairs from LAION, and then BLIP-2 is used to supplement the original captions with newly generated captions. Essentially, the proposed pipeline effectively uses three existing language/vision language models to design and construct a very large dataset, coined Human-Centric Image-Text (HC-IT), consisting of 167M training samples relevant to human activities. Then, a VL model is trained on HC-IT using standard contrastive learning.

2. **HC-VL+:** Although the present image-based HC-VL already produces state-of-the-art results across various datasets and settings, it is shown that it can be readily adapted to incorporate some temporal modeling with only a few hundred iterations of further training on a much smaller dataset of video/caption pairs, maintaining the zero-shot capabilities of the present image-based model.

3. **Results:** The present HC-VL models are significantly more data-efficient, can be trained with significantly fewer iterations, and more importantly, outperform several CLIP variants, often by large margins, on two important applications/tasks, namely image/video retrieval and zero-shot action recognition, being exhaustively evaluated on over 21 datasets. Notably, the improved accuracy is observed even with more lightweight models such as ViT-B/32, resulting in lower compute during inference.

**Human-Centric Vision-Language model:** As summarised above, the present techniques propose to pre-train a large-scale contrastive VL model tailored to a specific domain, namely that of human activities. The particular domain is chosen due to its relevance to important tasks/applications such as action recognition and image/video retrieval. Furthermore, the resulting model is referred to herein as a "Human-Centric Vision-Language" model (HC-VL). Training HC-VL is enabled by the construction of a large-scale activity-specific Human-Centric Image-Text (HC-IT) dataset. The construction of HC-IT is described below. Furthermore, below the training of HC-VL is also described, including how to incorporate temporal information while maintaining the zero-shot capabilities of the present image model (HC-VL+ model).

<u>Human-Centric Image-Text (HC-IT) Dataset</u>

<u>LLM-based action taxonomy generation & filtering:</u> The present domain-specific filtering strategy consists of two steps, the semi-automatic generation of a taxonomy of human activities, and the construction of language queries to query LAION-5B. More specifically, the present techniques first iteratively populate a semantic domain of actions by leveraging the pre-trained LLM GPT-3.5 accessed via the OpenAI API. To seed the process, the present techniques start by defining six broad categories: physical, communication & cognitive, leisure, emotional, domestic/health & self-care, and creative & professional activities. For each category, the LLM is iteratively prompted to create an initial but exhaustive list of coarse-grained instances with the following strategies:

*(1) List seeding:* the LLM is prompted to generate its most popular and representative activities in each category.
*(2) Alphabetic listing:* the model is prompted to generate human-centric activities in alphabetic order, starting with a different letter each time.
*(3) Synonym listing:* for each activity, the model is prompted to generate a limited list of synonyms that describe or are related to it.

For each of the resulting entries, the present techniques further add fine-grained categories using the following strategies:

i. *Verb composition:* given an activity verb, the LLM is prompted to generate a list of activities that can be composed of it (*making* → *making a cake, making* a *bed*).
ii. *Sub-category listing*: Given an activity, the LLM is prompted to generate a list of related fine-grained activities (*playing football* → *playing American football, playing soccer, playing five-a-side, etc*.). The process is repeated iteratively if the generated activities can be further expanded.

The activities obtained from Wikipedia's lists of human activities, hobbies, and sports are also added to the present list. Finally, duplicates and near duplicates are automatically removed, and then manually filtered to remove unrelated keywords. The final list consists of ~9.7K keywords.

Figures 1A and 1B show plots of collected keywords and their distributions. Specifically, Figure 1A shows the number of keywords and their distriution across the six pre-defined categories. Figure 1B shows a 2D PCA plot comparing embeddings of a random subset of 2K from the collected queries, ImageNet classes, and action categories of datasets used in the evaluation experiments described below. In particular, Figure 1B shows that our keywords covers the target domain of human activities without spanning other undesired domains.

Next, for each keyword, a set of textual queries is generated by using both pre-defined templates (*a photo* of a *person [keyword]*) and by prompting GPT-3.5 to generate a set of descriptive and diverse phrases that represent real-world scenarios involving the specified activity. These phrases are then used to query the LAION-5B dataset by retrieving images with a cosine similarity above a threshold (0.25) between the OpenAI ViT-L/14 encoding of the input caption and the LAION image embeddings. The final retrieval yields 279M unique url-text samples, out of which 256M were successfully downloaded.

Data denoising: Given that only ~ 40% of the captions are in English, the present techniques first start by automatically translating the non-English captions using the NLBB-200 model. Secondly, a caption complexity filter is applied that removes samples that are not sufficiently complex. The present techniques employ spaCy to build a sentence dependency tree, where the complexity is defined as the maximum number of edges at any particular node, and only consider samples with a complexity score $\geq 2$. Additionally, captions based on toxicity probability, and images based on watermark and NSFW probabilities, are filtered, and samples with values < 0.9 are kept. The application of all these filters results in a dataset of 167M image-text samples from LAION-5B's English, multilingual, and no-language subsets.

Text enhancement by re-captioning: After filtering and especially translating, some samples may present semantic gaps (i.e. the text is irrelevant to the image) or may even be incoherent. To alleviate this, the present techniques propose to leverage BLIP-2 to enrich the crawled captions with an automatically-generated set of alternative captions. Beam search is used to generate 5 captions per image and adjust the similarity penalty to encourage the generation of diverse captions that cover different aspects of the image.

It has been noticed however that while the captions produced are generally accurate, they tend to be somewhat generic and vague, often following a template (e.g. *a photo of* ...), likely a bias from BLIP-2's training dataset. Due to this, randomly sampling between the generated captions and the original ones degrades performance. The present techniques propose instead a CLIP score-based sampling strategy. Given a pre-trained CLIP model (herein, a ViT-B/16 model is used), the similarity score between the original caption and the corresponding image is pre-computed. At training time, either a generated or an original caption conditioned on this score is sampled.

Models

HC-VL & image pre-training: The present model architecture is identical to that of CLIP to allow direct and fair comparisons. The present HC-VL model consists of an image encoder $f_\theta$ and a text encoder $g_\phi$, instantiated as a ViT and a transformer respectively. Similarly, the present pre-training pipeline is closely aligned in terms of losses, augmentation, and initialization with CLIP, and the present model is trained with a standard image-text contrastive loss applied on the [CLS] token of the image encoder and the [EOS] of the text encoder. The main difference to CLIP is that the present models are trained on the present HC-IT dataset. This has a crucial effect on the model's performance. This result can be attributed to the properties of HC-IT: in addition to in-domain coverage shown in Figures 1A and 1B, the present domain-specific training also induces an implicit hard mining approach.

In support of this, Figure 2 shows the cosine similarities measured between image-text pairs of a randomly sampled batch sampled from HC-IT and LAION. Specifically, Figure 2 shows cosine similarities between the image-text pairs of a randomly selected batch of samples from LAION and HC-IT dataset computed using a pretrained CLIP (ViT-L/14) model. Notice that the similarity scores are higher overall for the present dataset, and that a significantly higher number of pairs score higher than 0.25 for the present dataset. This suggests that batches formed in the present dataset contain a higher number of hard negatives. That is, compared to LAION, the present batch contains samples that are semantically closer, and hence harder for the model to differentiate. This is particularly noticeable in the high-score region (>0.25) where the present model is trained still from thousands of such high-scoring negative pairs, while LAION contains very few such cases.

**HC-VL+ by further pre-training on video:** One option for further pre-training on video is to use the WebVid dataset. However, it is found to be of much lower quality compared to the prsent HC-IT dataset, leading to degraded performance. Instead, the present techniques propose using the much smaller but higher quality Spoken Moments in Time (SMiT). To avoid overfitting and catastrophic forgetting, the present techniques introduce minimal changes to the present image HC-VL model to incorporate temporal information *while maintaining the zero-shot capabilities of the present image model.*

Let $v$ be a video with $T$ frames $\{x_i\}_{i=1:T}$. Let $A_I(\mathbf{Q},\mathbf{K},\mathbf{V}) = \mathrm{softmax}(\frac{\mathbf{QK^T}}{\sqrt{L}})\mathbf{V}$ be the attention operation, where **K, Q** and **V** are the output of projections of $\mathbf{W_q}$, $\mathbf{W_k}$ and $\mathbf{W_v}$ respectively, and $L$ the number of tokens per frame. The present model's attention is computed as the addition of two attention branches. The first consists of per-frame spatial attentions $A_I(\mathbf{Q}_i, \mathbf{K}_i, \mathbf{V}_i)$. The second one computes the cross attention between the $T$ class tokens and spatial tokens for frame $i$. More specifically, a learnable temporal embedding per frame is added to the [CLS] tokens $x_i^{cls}$ and then projected using $\mathbf{W_k}$ and $\mathbf{W_v}$ to obtain $\mathbf{K}^c \in \mathbb{R}^{T\times d}$ and $\mathbf{V}^c \in \mathbb{R}^{T\times d}$. Then the cross attention $A_I(\mathbf{Q}_i, \mathbf{K}^c, \mathbf{V}^c)$ is computed (i.e. spatial tokens of frame i attend to all class tokens). Both branches are finally combined as $A_I(\mathbf{Q}_i, \mathbf{K}_i, \mathbf{V}_i) + s \cdot A_I(\mathbf{Q}_i, \mathbf{K}^c, \mathbf{V}^c)$, with s being a learnable scaling factor set initially to zero to add stability and avoid catastrophic forgetting and the second term helping diffuse temporal information through the [CLS] tokens into spatial tokens. At the end of the network, a temporal attention layer $h_\mu$ is added that performs temporal attention between the $T$ [CLS] tokens $x_i^{cls}$. The final video feature representation is $\frac{1}{T}\sum_i f_\theta(x_i) + h_\mu([f_\theta(x_1), \ldots, f_\theta(x_T)])$. Note that adding the pooled feature to the output of the temporal attention ensures that the present model stays "close" to the present image model. All parameters are frozen except the newly-introduced ones ($s$ and $h_\mu$). A model further pretrained on video is referred to herein as **HC-VL+.**

Efficient pre-training: The large-scale nature of VL pre-training poses significant computational challenges. To make the training of larger models more feasible on the available hardware, a two-step strategy is followed: firstly, train a model using larger patches for tokenization, which effectively results in using a smaller number of tokens. Then, fine-tune the model for 1/10 of the epochs using the target desired patch size. When initializing the model from the previous stage, in addition to the standard bilinear interpolation of the positional embeddings, the present techniques also propose to resize, via bilinear interpolation, the kernels learned by the convolutional layer processing the image patches. This is found to work very well in practice and it is the strategy employed for training our ViT-B/16 variant, fine-tuning from a ViT-B/32 model.

Pre-training details

HC-VL pre-training details: The present procedure largely follows the training recipe of CLIP, using AdamW ($\beta_1$ = 0.9, $\beta_2$ = 0.98), a learning rate of 5$e$ - 4 that is decayed using a cosine scheduler after a ramp-up of 2,000 iterations, and a weight decay of 0.2. The global batch size is set to 32,800 and the model is trained with mixed precision for 132k iterations, seeing ~ 4$B$ samples, *significantly shorter than the typical CLIP scheduler.* Unless otherwise stated, the image size is set to 224 × 224px and the text encoder context is set to 77. The augmentations applied during training match the ones used to train OpenCLIP. The present ViT-B/32 variant is trained from scratch on HC-IT (as explained above). For the ViT-B/16 variant, the present techniques follow the *efficient pre-training* procedure described above and initialize from the ViT-B/32 weights and then fine-tune for 12k iterations. The training is conducted on 32 A100 GPUs using PyTorch following the open-sourced implementation of CLIP.

HC-VL + pre-training details: To train HC-VL+, the present techniques start from HC-VL (pre-trained on images), freeze all parameters except for the newly introduced ones and further pre-train the rest on the SMiT dataset (~ 0.5M video-text pairs). The pre-training process follows the hyperparameters used in image pre-training, except for the batch size and training duration, which are set to 20, 480 and to 580 iterations, respectively. Note that *the video pre-training process is very fast.* For video data, 8 frames are sampled uniformly at a resolution of 224 × 224px. The following augmentations are applied: random flipping (0.5), color jittering (0.8), random grayscaling (0.2) and random resizing and cropping.

Comparison with existing techniques.

To showcase the effectiveness of the proposed domain-specific pre-training, the present models are evaluated on two important tasks: image/video retrieval and action recognition. These tasks can broadly be viewed as belonging to the macro domain of human activities.

Specifically, HC-VL and HC-VL+ are compared with all the equivalently sized models available as part of the OpenCLIP repo, noting that not all methods offer both the B/32 and B/16 variants. Moreover, it is emphasized that all models used for the comparison are trained using longer schedulers on a significantly larger number of samples, ranging from 400M for OpenCLIP (LAION-400) and CLIP, to 10B for SigLIP. In comparison, the present models are trained only on 167M samples. Figure 3 shows how the present domain-specific model HC-VL is both more data-efficient and more accurate, outperforming models trained on 10B samples with only 167M. Accuracy is an aggregate over all 16 action recognition datasets. Figure 4 is a chart showing how the present domain-specific models HCVL and HC-VL+ achieve state-of-the-art accuracy across 16 action recognition datasets and 5 image/video retrieval, largely outperforming general-purpose CLIP models.

**Image** & video retrieval: Following best practices the present models, HC-VL and HC-VL+, are evaluated in a zero-shot manner on Flickr30k and MS-COCO for image retrieval, and respectively, MSRVTT, MSVD and DiDemo for video retrieval. It is noted that under this setting (zero-shot), HC-VL and HC-VL+ are applied directly to the downstream tasks of image and video retrieval without any fully-supervised training. For image retrieval, results are only reported for HC-VL, as HC-VL+ is a temporal model and operates on videos. For video retrieval, HC-VL is applied to video by means of simple temporal pooling ( $\frac{1}{T}\sum_i f_\theta(x_i)$ ) while HC-VL+ is applied as is.

Figure 5 is a table showing zero-shot image retrieval results in terms of R@1/R@10 retrieval accuracy on Flickr30k and MS-COCO. For image retrieval, as the results from Figure 5 show, for most cases, the present model significantly outperforms all prior methods, despite some of them using improved architectures (e.g. [60]) and, in all cases, significantly more images (up to 10B [75]) than the comparatively small 167M HC-IT dataset. Importantly, the present model outperforms LAION-400/2B/5B models with the HC-IT (derived from LAION) dataset.

Figure 6 is a table showing zero-shot video retrieval results in terms of R@1/R@10 retrieval accuracy on MSRVTT, MSVD and DiDemo. (* indicates temporal modeling.) As Figure 6 shows, similar improvements are reported for video retrieval too, with the present image (HC-VL) model matching or outperforming the other CLIP variants, and HC-VL+ showing significant further gains.

Action recognition

Zero-shot evaluation: To evaluate HC-VL and HC-VL+ on zero-shot action recognition, a new benchmark is constructed, formed of 16 datasets: UCF-101, HMDB-51, Daly, Kinetics-400, Kinetics-220 (a subset of Kinetics-600 that includes only the classes not present in Kinetics-400), Kinetics-700, MiT, HAA500, HACS, Hollywood2, Olympic Sports, UCF-50, UCF Sports, AVA, Something-Else and Charades. For Kinetics-220, UCF-101, and HMDB-51, the results reported are the average across the 3 splits introduced by their authors. This new benchmark covers a wide range of activities with videos of varying duration, perspectives, and setups. Eight frames are used for all datasets except for Charades where 32 frames are used due to this dataset's higher video length. This is the most extensive zero-shot action recognition benchmark covering both multi-label and single-label settings, with a high variability of the numbers of classes (up to 700), capturing conditions, length, and subdomains.

As for the case of image and video retrieval, under the zero-shot setting, HC-VL and HC-VL+ are applied directly to the downstream datasets without any fully-supervised training while HC-VL is applied to video by means of simple temporal pooling.

Figures 7A and 7A show zero-shot classification results across a suite of action recognition datasets for, respectively, ViT-B/32 and ViT-B/16 models. The results are presented in terms of Top-1 (%) and Top-5 (%) accuracy (shown in parentheses). (* indicates results reported in terms of mAP). HC-VL+ includes temporal modeling. Further comparisons against methods with temporal modeling are shown in Figure 8.

As the results from Figures 7A and 7B show, *the present models significantly outperform all CLIP variants* emphasizing the importance of the present domain-specific pre-training. This is more evident when considering the comparisons with OpenCLIP models which are trained on LAION, out of which the present HC-IT dataset was derived. Another important conclusion is that the present *ViT-B/32 models outperform CLIP ViT-B/16 models* by a large margin. Finally, it is worth noting that the impact of the present additional video pre-training, resulting in the present HC-VL+ model, is in many cases quite significant.

Figure 8 is a table showing zero-shot classification results on HMDB-51 and UCF-101 in terms of Top-1 (%) accuracy. In addition to the present newly constructed benchmark, Figure 8 reports zero-shot action recognition results on UCF-101 and HMDB-51, compared with several state-of-the-art methods. It is noted that many of these results are not directly comparable to the present techniques as most methods are trained on smaller datasets (mostly on Kinetics-400) and only a few of them are based on CLIP pre-training. Despite this, as Figure 8 shows, the present models significantly outperform all other methods, setting a new state-of-the-art.

Few-shot evaluation: Finally, both HC-VL and HC-VL+ can be used to replace CLIP in all CLIP video adaptation methods which perform downstream fine-tuning. This is an important feature of the present models, as they can be seamlessly combined with recent advancements in action recognition. Hence, results for few-shot action recognition are also reported. The present model is fused with the state-of-the-art architecture of Olympic Sports. Integrating HC-VL with Olympic Sports is straightforward. To integrate HC-VL+, the following components are inserted into the model: the video-specific prompt generator, the cross-frame interaction mechanism, and the multi-frame integration transformer. For the latter, the cross-frame interaction mechanism is replaced with the present temporal attention layer. Overall, two models are obtained, coined X-HC-VL and X-HC-VL+.

For the few-shot setting, X-HC-VL and X-HC-VL+ are evaluated on three datasets: UCF-101, HMDB-51, and Kinetics-400 for 2, 4, 8 and 16-shot. On UCF-101 and HMDB-51, the results are averaged across the 3 train-test splits, while for Kinetics-400 K samples are selected from the training set and results on the validation set are reported. Figure 9 is a table showing few-shot classification results on HMDB-51, UCF-101 and Kinetics-400 in terms of Top-1 (%) accuracy for 2/4/8/16-shot. (* - indicates results taken from Olympic Sports). As Figure 9 shows, both of the present variants, X-HC-VL and X-HC-VL+, outperform the previous state-of-the-art models X-CLIP and X-Florence (which benefits from pre-training on FID-900M dataset) by a large margin on all datasets.

Ablation studies: Some interesting components or features of the present techniques are analysed.

Effect of BLIP2 re-captioning: Figure 10 is a table showing the effect of re-captioning. Specifically, Figure 10 shows zero-shot results on UCF-101 and HMDB-51 with ViT-B/32 when training with different automatic re-captioning variants. Figure 10 shows the effect of using additional BLIP-2 captions during pre-training. The impact of the number of generated captions per sample is evaluated, as well as the impact of using the proposed sampling strategy based on the CLIP score between the original caption and the image. In the absence of the present sampling strategy, the original caption is selected with a probability of 0.8. It is seen that lower values degrade performance. As the results show, using the proposed strategy along with re-captioning can boost the accuracy of the model by up to 2%.

Effect of data quantity: The present models are trained on significantly fewer samples (167M) than the current state-of-the-art VL models, commonly trained on 400M (LAION-400M), 2B (LAION-5B) and even 6.6B (BASIC) samples. Going one step further, herein, the present applicant seeks to explore the performance of the present model in even lower data regimes. Figure 11 is a tbale showing training dataset size vs accuracy, and specifically shows zero-shot results on UCF-101 and HMDB-51 with a ViT-B/32 for different numbers of image-text pairs, run for a fixed number of iterations. Figure 11 reports results for zero-shot classification on UCF-101 and HMDB-51 for a ViT-B/32 HC-VL trained with 69M, 135M and 167M samples. In all cases, the model was trained for the same number of seen samples (4B). It is seen that reducing the dataset size has a considerable impact on accuracy.

Effect of LLM-based domain construction: At the core of HC-IT is the proposed LLM-based domain construction and dataset filtering method. To further showcase its effect, it is compared with an equal-sized dataset of 167M image-text pairs sampled by: filtering based on CLIP's image-text similarity scores and simultaneously applying all the filtering steps described (e.g.: grammar, NSFW removal etc), but without applying the present proposed LLM-based approach. Figure 12 is a table showing the effect of LLM-based domain construction, and specifically zero-shot results on UCF-101, HMDB-51 and K400 results without (1st row) and with the proposed LLM-based filtering (2nd row). As the results from Figure 12 show, the present approach significantly outperforms the CLIP filtering baseline, further highlighting the importance of the proposed LLM-based domain construction.

Thus, the present techniques provide HC-VL, a VL model specifically pre-trained on the domain of human activities. To this end, an innovative LLM-based method is proposed for automatic dataset design which enables the construction of a vast human activity-specific dataset by retrieving, filtering, and re-captioning related image/text pairs from LAION. Through standard contrastive learning, we trained our HC-VL on this dataset. Furthermore, it is shown how additional pre-training can be done on smaller video datasets without compromising the generalization capabilities of our image-based model. The present models (HC-VL & HC-VL+) achieve state-of-the-art performance across a large suite of datasets (21) for zero-shot image and video retrieval and zero- and few-shot action classification. Notably, this is achieved while significantly improving the data- and compute-efficiency compared to CLIP and its variants.

Figure 13 is a flowchart of example steps for generating a training dataset for training a vision-language machine learning, ML, model to perform action recognition. The steps/method are computer-implemented. The method comprises: generating a taxonomy of human activities, wherein the taxonomy comprises a plurality of human activity types that are organised into a hierarchy (step S100); generating, for each human activity type of the plurality of human activity types in the taxonomy, a set of textual queries (step S102); retrieving, from a multi-modal dataset, a plurality of image-text pairs using the generated set of textual queries, wherein the image in each image-text pair depicts a specific human activity type and the text in each image-text pair represents a caption for the image (step S104); generating at least one additional caption for each image of the retrieved image-text pairs (step S106); and combining, for each retrieved image-text pair, the generated at least one additional caption with the image-text pair, and thereby generating the training dataset (step S108).

At step S100, the step of generating a taxonomy of human activities may comprise: generating, using a large language model, LLM, the plurality of human activity types; and organising, using the LLM, the generated plurality of human activity types into a hierarchy. Any suitable LLM may be used for this, such as, but not limited to, a generative pre-trained transformer, GPT, model. As mentioned above, a pre-trained LLM GPT-3.5 may be used, which may be accessed via the OpenAI API. Advantageously therefore, the present techniques harness knowledge of a powerful LLM to generate the taxonomy.

The method to generate a training dataset may further comprise: obtaining at least one category of human activity types; and prompting, using the obtained at least one category, the LLM to generate the plurality of human activity types. That is, the method uses seeds to help the LLM to generate a plurality of human activity types which are then to be organised into a hierarchy. The categories may include, for example, "physical", "communication and cognitive", "leisure", "emotional", "domestic, health and self-care", and "creative and professional". It will be understood that these are example categories and the taxonomy may be generated by seeding the LLM with additional or alternative categories.

For each category, the LLM may be iteratively prompted to create an initial, but exhaustive, list of coarse-grained examples of each category. A number of prompting strategies may be used.

For example, prompting the LLM may comprise: prompting the LLM to generate a list of popular human activity types for each category of the obtained at least one category. That is, the LLM may be prompted to generate the most popular and representative activities in each category. This prompting is "list seeding", as described above.

In another example, prompting the LLM may comprise: prompting, using each letter of an alphabet, the LLM to generate a list of human activity types for each category of the obtained at least one category. That is, the LLM may be prompted to generate human-centric activities in alphabetic order, starting with a different letter of the alphabet each time. In one case, the LLM may be prompted in English, and the alphabet may therefore be the English alphabet. However, it will be understood that the specific language and alphabet used is non-limiting. This prompting is "alphabetic listing", as described above.

In another example, prompting the LLM may further comprise: prompting the LLM to generate at least one synonym for each generated human activity type in the list. That is, for each activity generated via the prompting, the LLM may be prompted to generate a limited list of synonyms that describe the activity or are related to the activity. This prompting is "synonym listing", as described above.

Prompting the LLM to generate at least one synonym may comprise prompting the LLM to generate a pre-defined maximum number of synonyms for each generated human activity type. This may ensure that the LLM only generates a limited list of synonyms, which are more likely to be focussed or close to the original activity type.

After the coarse-grained instances have been generated, further prompting of the LLM may take place to generate fine-grained categories. A number of prompting strategies may be used for this.

For example, prompting the LLM to generate the fine-grained categories may comprise: prompting the LLM to generate, for each activity verb in a set of activity verbs, at least one human activity type that is composed of the activity verb. That is, given an activity verb, the LLM may be prompted to generate a list of activities that can be composed of the verb. For example, the verb "making" may result in "making a cake", "making a bed", "making money", etc. This type of prompting may be considered "verb composition".

In another example, prompting the LLM to generate the fine-grained categories may comprise: prompting the LLM to generate at least one sub-type activity for each generated human activity type. That is, given an activity, the LLM may be prompted to generate a list of related fine-grained activities. For example, the activity "playing football" may lead to "playing American football", "playing soccer", "playing five-a-side" etc. This prompting process may be repeated iteratively if the generated activities can be further expanded. This type of prompting may be considered "sub-category listing".

The method to generate a training dataset may comprise adding activities from other sources to the list of activities generated by the LLM, to ensure the taxonomy is exhaustive or thorough. For example, activities obtained from Wikipedia's lists of human activities, hobbies, and sports may also be added to the list generated by the LLM.

Once the list of activities have been generated, the method may further comprise: removing duplicate and near-duplicates from the generated plurality of human activity types. This ensures that the taxonomy is well-structured and organised, which makes retrieving image-text pairs more efficient. In one example, the list of human activities contains ~9.7K keywords.

At step S104 in Figure 13, for each keyword/human activity type in the taxonomy, a set of textual queries is generated. Two techniques may be used to generate the textual queries.

One technique involves using pre-defined templates. That is, generating, for each human activity type of the plurality of human activity types in the taxonomy, a set of textual queries may comprise: generating the set of textual queries by combining each human activity type of the plurality of human activity types with a template from a set of pre-defined query templates. The templates may take the following example form: "a photo of a person [keyword]". Thus, many queries can be generated using such templates, by inserting the generated human activity types for the [keyword].

Another technique involves further prompting the LLM to generate set of descriptive and diverse phrases that represent real-world scenarios involving the specified activity. That is, generating, for each human activity type of the plurality of human activity types in the taxonomy, a set of textual queries may comprise: prompting, for each human activity type, the LLM to generate a textual phrase that represents a scenario involving the human activity type.

The generated textual queries may be used to query an existing database / dataset, to thereby extract relevant entries. In one example, the multi-modal dataset may be LAION-5B, which is a dataset comprising image-text pairs.

Thus, step S106 of retrieving, from a multi-modal dataset, a plurality of image-text pairs using the generated set of textual queries may comprise, for each textual query: generating an embedding vector for the textual query; and retrieving, from the multi-modal dataset, at least one image, where the at least one image has an embedding vector that is similar to the embedding vector of the textual query. In other words, the textual queries are used to query the multi-modal dataset by retrieving images with a cosine similarity (above a threshold) between an embedding of the input textual query and an embedding of image in the dataset. In one example described above where LAION-5B is queried, 256M unique image-text samples were retrieved.

The method may further comprise: translating the text of the image-text pairs retrieved from the multi-modal dataset, so that all the text is in the same language. For example, non-English text captions may be translated into English using machine translation.

The method may further comprise: filtering the plurality of image-text pairs retrieved from the multi-modal dataset.

In one example, the filtering may comprise: applying a text complexity filter to remove image-text pairs that have text having a low complexity score. Thus, image-text pairs may be removed if their text captions are not sufficiently complex. In one example, spaCy may be employed to build a sentence dependency tree, where the complexity is defined as the maximum number of edges at any particular node. Only samples with a complexity score $\geq 2$ may be compared.

Other types of filtering include filtering captions based on toxicity probability, and filtering images based on watermark and not safe for work, NSFW, probabilities. Samples with values < 0.9 may be kept. The application of all these filters results in a dataset of 167M image-text samples from LAION-5B's English, multilingual, and no-language subsets.

As noted above, each retrieved image-text pair is augmented or enhanced with at least one additional caption. The step S106 of generating at least one additional caption for each image of the retrieved image-text pairs may preferably occur after the filtering (and translating), because some remaining pairs may still have text that is irrelevant to the image or text that is incoherent. The present techniques may leverage BLIP-2 to enrich the original captions with an automatically-generated set of alternative captions. Beam search may be used to generate, for example, five captions per image and adjust the similarity penalty to encourage the generation of diverse captions that cover different aspects of the image.

Generating at least one additional caption for the image of each retrieved image-text pair may comprise using a machine learning, ML, model to generate the at least one additional caption for the image. The ML model may be a Bootstrapping Language-Image Pre-training, BLIP, model.

Figure 14 is a flowchart of example steps for training a vision-language machine learning, ML, model to perform an image-based and/or video-based task, such as action recognition. The method is computer-implemented. The method comprises: obtaining a vision-language ML model comprising an image encoder and a text encoder (step S200); obtaining a training dataset generated using the methods described herein such as those described with respect to Figure 13 (step S202); and training the vision-language ML model to perform the task (e.g. action recognition) using the training dataset (step S204).

The vision-language ML model may be, or be based on, a Contrastive Language-Image Pre-Training, CLIP, model. In some cases, the present model architecture may be identical to that of CLIP to allow direct and fair comparisons. The vision-lanaguage ML model may comprise an image encoder $f_\theta$ and a text encoder $g_\phi$, instantiated as a ViT and a transformer respectively. Similarly, the present pre-training pipeline may be closely aligned in terms of losses, augmentation, and initialization with CLIP, and the present model may be trained with a standard image-text contrastive loss applied on the [CLS] token of the image encoder and the [EOS] of the text encoder. The main difference to CLIP is that the present models are trained on the present HC-IT dataset.

As explained in more detail above, during the generation of the additional captions for the image-text pairs, it is found that the generated captions may be generic and vague. This means that during training, randomly sampling between the generated captions and the original captions (i.e. as retrieved from the multi-modal dataset), degrades performance of the model being trained. To deal with this, a score-based sampling strategy may be employed. The training method may further comprise: calculating, for each image-text pair in the training dataset, a similarity score between the text of the image-text pair and the image of the image-text pair.

Then, the step S204 of training the vision-language ML model may comprise: sampling, for each image-text pair, either the text in the image-text pair or at least one additional caption associated with the image-text pair, based on the calculated similarity score; and training the vision-language ML model with the sampled text or at least one additional caption.

After step S204 has been completed, the result is a trained vision-language model that has been trained on image-text pairs. As described above, it may be desirable to further train this model so that it can also perform action recognition in videos. Steps S206 to S210 are therefore optional, and only deployed to generate the HC-VL+ model described above.

Thus, optionally, the vision-language ML model may be further trained using videos rather than just images. Thus, the training may further comprise: freezing a subset of parameters of the vision-language ML model following the training using the obtained training dataset (step S206); obtaining a further training dataset comprising a plurality of videos (step S208); and further training a remaining subset of parameters of the vision-language ML model using the further training dataset (step S210). This may enable the vision-language ML model to perform action recognition in videos as well as images.

Figure 15 is a flowchart of example steps for using a trained vision-language machine learning, ML, model to perform an image-based and/or video-based task, such as action recognition. The method may be performed by a user device. The method may comprise: receiving a user-input text query containing a human activity (step S300); processing the received user-input text query by the trained vision-language ML model (step S302); and, in the case of image/video retrieval, retrieving, using the processing, at least one image or video from a database of images and videos that depicts the human activity in the text query (step S304).

Thus, the trained model may be used to perform, for example, action recognition in images and/or videos in real-time or near-real time as they are being captured (which is useful for many scenarios, such as sports TV broadcasting, CCTV/security, etc.), image or video or video clip retrieval from a gallery/database, classifying images/videos captured by a user so they can be automatically turned into albums, natural language search of image/video databases, etc.

Figure 16 is a block diagram showing a server 100 for generating a training dataset, and for training a vision-language, VL, machine learning, ML, model 106 using the generated training dataset 108. The server 100 comprises at least one processor 102 coupled to memory 104, for performing the methods described herein, such as those described in relation to Figures 13 and 14.

Once the model 106 has been trained, it can be deployed on a plurality of electronic devices 200. For the sake of simplicity, only one electronic device is shown in Figure 16.

The electronic device 200 is suitable for using a trained vision-language machine learning, ML, model to perform action recognition.

The electronic device 200 may be a smart device. The electronic device may be a smartphone. A smartphone is an example of a smart device. electronic device may be a smart appliance. A smart appliance is another example of a smart device. An example of a smart appliance is a smart television (TV), a smart fridge, a smart oven, a smart vacuum cleaner, a smart robotic device, a smart lawn mower, and so on. More generally, the electronic device may be a constrained-resource device, but which has the minimum hardware capabilities to use the trained ML model. The electronic device may be any one of: a smartphone, tablet, laptop, computer or computing device, virtual assistant device, a vehicle, an autonomous vehicle, a robot or robotic device, a robotic assistant, image capture system or device, an augmented reality system or device, a virtual reality system or device, a gaming system, an Internet of Things device, or a smart consumer device (such as a smart fridge, smart vacuum cleaner, smart lawn mower, smart oven, etc). It will be understood that this is a non-exhaustive and non-limiting list of example devices.

The electronic device 200 comprises storage storing a database 208 of images and videos; and at least one processor 202 coupled to memory 204. The electronic device may comprise one or more interfaces 210. For example, the interface may be or comprise a display and an interface for a user to input a text query. The electronic device 200 receives the trained ML model 206 from the server 100 and stores this locally.

The at least one processor 202 coupled to memory 204 is for: receiving a user-input text query containing a human activity (e.g. via the interface(s) 210); processing the received user-input text query by the trained vision-language ML model 206; and retrieving, using the processing, at least one image or video from the database 208 that depicts the human activity in the text query. The retrieved image/video may be displayed on a display of the electronic device.

**References:**

- LAION-B - Christoph Schuhmann, Romain Beaumont, Richard Vencu, Cade Gordon, Ross Wightman, Mehdi Cherti, Theo Coombes, Aarush Katta, Clayton Mullis, Mitchell Wortsman, et al. Laion-5b: An open large-scale dataset for training next generation image-text models. arXiv preprint arXiv:2210.08402, 2022.

- NLBB-200 - Marta R Costa-jussa, James Cross, Onur Celebi, Maha El-bayad, Kenneth Heafield, Kevin Heffernan, Elahe Kalbassi, Janice Lam, Daniel Licht, Jean Maillard, et al. No language left behind: Scaling human-centered machine translation. arXiv preprint arXiv:2207.04672, 2022.
- spaCy - Matthew Honnibal, Ines Montani, Sofie Van Landeghem, and Adriane Boyd. spaCy: Industrial-strength Natural Language Processing in Python. 2020.
- BLIP-2 - Junnan Li, Dongxu Li, Silvio Savarese, and Steven Hoi. BLIP-2: Bootstrapping language-image pre-training with frozen image encoders and large language models. arXiv preprint arXiv:2301.12597, 2023.
- OpenCLIP - Gabriel Ilharco, Mitchell Wortsman, Ross Wightman, Cade Gordon, Nicholas Carlini, Rohan Taori, Achal Dave, Vaishaal Shankar, Hongseok Namkoong, John Miller, Hannaneh Hajishirzi, Ali Farhadi, and Ludwig Schmidt. Open-CLIP, 2021.
- CLIP - Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In International Conference on Machine Learning, 2021.
- ViT - Alexey Dosovitskiy, Lucas Beyer, Alexander Kolesnikov, Dirk Weissenborn, Xiaohua Zhai, Thomas Unterthiner, Mostafa Dehghani, Matthias Minderer, Georg Heigold, Sylvain Gelly, et al. An image is worth 16x16 words: Transformers for image recognition at scale. International Conference on Learning Representations, 2021.
- Transformer - Ashish Vaswani, Noam Shazeer, Niki Parmar, Jakob Uszkoreit, Llion Jones, Aidan N Gomez, Łlukasz Kaiser, and Illia Polosukhin. Attention is all you need. Advances on Neural Information Processing Systems, 2017.
- SMiT - Mathew Monfort, SouYoung Jin, Alexander Liu, David Harwath, Rogerio Feris, James Glass, and Aude Oliva. Spoken moments: Learning joint audio-visual representations from video descriptions. In IEEE Conference on Computer Vision and Pattern Recognition, 2021.
- X-CLIP & X-Florence - Bolin Ni, Houwen Peng, Minghao Chen, Songyang Zhang, Gaofeng Meng, Jianlong Fu, Shiming Xiang, and Haibin Ling. Expanding language-image pretrained models for general video recognition. In European Conference on Computer Vision, 2022.
- UCF-101 - Khurram Soomro, Amir Roshan Zamir, and Mubarak Shah. UCF101: A dataset of 101 human actions classes from videos in the wild. arXiv preprint arXiv:1212.0402, 2012.
- HMDB-51 - Hildegard Kuehne, Hueihan Jhuang, Estibaliz Garrote, Tomaso Poggio, and Thomas Serre. HMDB: a large video database for human motion recognition. In IEEE International Conference on Computer Vision, 2011.
- Kinetics-400 - Will Kay, Joao Carreira, Karen Simonyan, Brian Zhang, Chloe Hillier, Sudheendra Vijayanarasimhan, Fabio Viola, Tim Green, Trevor Back, Paul Natsev, Mustafa Suleyman, and Andrew Zisserman. The Kinetics human action video dataset. arXiv preprint arXiv:1705.06950, 2017.
- Kinetics-220 - Shizhe Chen and Dong Huang. Elaborative rehearsal for zero-shot action recognition. In IEEE International Conference on Computer Vision, 2021.
- Kinetics-600 - Joao Carreira, Eric Noland, Andras Banki-Horvath, Chloe Hillier, and Andrew Zisserman. A short note about kinetics-600. arXiv preprint arXiv:1808.01340, 2018.
- Kinetics-700 - Joao Carreira, Eric Noland, Chloe Hillier, and Andrew Zisserman. A short note on the kinetics-700 human action dataset. arXiv preprint arXiv:1907.06987, 2019.
- MiT - Mathew Monfort, Alex Andonian, Bolei Zhou, Kandan Ramakrishnan, Sarah Adel Bargal, Tom Yan, Lisa Brown, Quanfu Fan, Dan Gutfruend, Carl Vondrick, et al. Moments in time dataset: one million videos for event understanding. IEEE Transactions of Pattern Analysis and Machine Intelligence, pages 1-8, 2019.
- Daly - Philippe Weinzaepfel, Xavier Martin, and Cordelia Schmid. Human action localization with sparse spatial supervision. arXiv preprint arXiv:1605.05197, 2016.
- HAA500 - Jihoon Chung, Cheng-hsin Wuu, Hsuanru Yang, Yu-Wing Tai, and Chi-Keung Tang. Haa500: Human-centric atomic action dataset with curated videos. In IEEE International Conference on Computer Vision, 2021.
- HACS - Hang Zhao, Zhicheng Yan, Lorenzo Torresani, and Antonio Torralba. Hacs: Human action clips and segments dataset for recognition and temporal localization. arXiv preprint. arXiv:1712.09374, 2019.5
- Hollywood2 - Marcin Marszalek, Ivan Laptev, and Cordelia Schmid. Actions in context. In 2009 IEEE Conference on Computer Vision and Pattern Recognition, pages 2929-2936. IEEE, 2009.
- Olympic Sports - Juan Carlos Niebles, Chih-Wei Chen, and Li Fei-Fei. Modeling temporal structure of decomposable motion segments for activity classification. In European Conference on Computer Vision, 2010.
- UCF-50 - Kishore K Reddy and Mubarak Shah. Recognizing 50 human action categories of web videos. Machine vision and applications, 24(5):971-981, 2013.

- UCF Sports - Khurram Soomro and Amir R Zamir. Action recognition in realistic sports videos. In Computer vision in sports, pages 181-208. Springer, 2015.
- LAION-400M - Christoph Schuhmann, Richard Vencu, Romain Beaumont, Robert Kaczmarczyk, Clayton Mullis, Aarush Katta, Theo Coombes, Jenia Jitsev, and Aran Komatsuzaki. Laion-400m: Open dataset of clip-filtered 400 million image-text pairs. arXiv preprint arXiv:2111.02114, 2021.
- MTE - Xun Xu, Timothy M Hospedales, and Shaogang Gong. Multi-task zero-shot action recognition with prioritised data augmentation. In European Conference on Computer Vision, 2016.
- ASR - Qian Wang and Ke Chen. Alternative semantic representations for zero-shot human action recognition. In Joint European Conference on Machine Learning and Knowledge Discovery in Databases, 2017.
- ZSECOC - Jie Qin, Li Liu, Ling Shao, Fumin Shen, Bingbing Ni, Jiaxin Chen, and Yunhong Wang. Zero-shot action recognition with error-correcting output codes. In IEEE Conference on Computer Vision and Pattern Recognition, 2017.
- UR - Yi Zhu, Yang Long, Yu Guan, Shawn Newsam, and Ling Shao. Towards universal representation for unseen action recognition. In IEEE Conference on Computer Vision and Pattern Recognition, 2018.
- E2D - Junyu Gao, Tianzhu Zhang, and Changsheng Xu. I know the relationships: Zero-shot action recognition via two-stream graph convolutional networks and knowledge graphs. In AAAI Conference on Artificial Intelligence, 2019.
- TS-GCN - Biagio Brattoli, Joseph Tighe, Fedor Zhdanov, Pietro Perona, and Krzysztof Chalupka. Rethinking zero-shot video classification: End-to-end training for realistic applications. In IEEE Conference on Computer Vision and Pattern Recognition, 2020.
- ER-ZSAR - Shizhe Chen and Dong Huang. Elaborative rehearsal for zero-shot action recognition. In IEEE International Conference on Computer Vision, 2021
- MUFI - Zhaofan Qiu, Ting Yao, Chong-Wah Ngo, Xiao-Ping Zhang, Dong Wu, and Tao Mei. Boosting video representation learning with multi-faceted integration. In IEEE Conference on Computer Vision and Pattern Recognition, 2021.
- ActionCLIP - Mengmeng Wang, Jiazheng Xing, and Yong Liu. Action-CLIP: A new paradigm for video action recognition. arXiv preprint arXiv:2109.08472, 2021.
- ClipBert - Jie Lei, Linjie Li, Luowei Zhou, Zhe Gan, Tamara L Berg, Mohit Bansal, and Jingjing Liu. Less is more: Clipbert for video-and-language learning via sparse sampling. In IEEE Conference on Computer Vision and Pattern Recognition, 2021.
- Frozen - Max Bain, Arsha Nagrani, G ¨ul Varol, and Andrew Zisserman. Frozen in time: A joint video and image encoder for end-to-end retrieval. In IEEE International Conference on Computer Vision, 2021.
- ViSET-96 - Keval Doshi and Yasin Yilmaz. Zero-shot action recognition with transformerbased video semantic embedding. arXiv preprint arXiv:2203.05156, 2022.
- BridgeFormer - Yuying Ge, Yixiao Ge, Xihui Liu, Dian Li, Ying Shan, Xiaohu Qie, and Ping Luo. Bridging video-text retrieval with multiple choice questions. In IEEE Conference on Computer Vision and Pattern Recognition, 2022.
- AURL - Shi Pu, Kaili Zhao, and Mao Zheng. Alignment-uniformity aware representation learning for zero-shot video classification. In IEEE Conference on Computer Vision and Pattern Recognition, 2022.
- RestT_101 - Chung-Ching Lin, Kevin Lin, Lijuan Wang, Zicheng Liu, and Linjie Li. Crossmodal representation learning for zero-shot action recognition. In IEEE Conference on Computer Vision and Pattern Recognition, 2022.
- BASIC - Hieu Pham, Zihang Dai, Golnaz Ghiasi, Kenji Kawaguchi, Hanxiao Liu, Adams Wei Yu, Jiahui Yu, Yi-Ting Chen, Minh-Thang Luong, Yonghui Wu, et al. Combined scaling for zero-shot transfer learning. arXiv preprint arXiv:2111.10050, 2021.
- TSM - Ji Lin, Chuang Gan, and Song Han. TSM: Temporal shift module for efficient video understanding. In IEEE International Conference on Computer Vision, 2019.
- TimeSformer - Gedas Bertasius, Heng Wang, and Lorenzo Torresani. Is space-time attention all you need for video understanding? In International Conference on Machine Learning, 2021.8
- Swin-B - Ze Liu, Jia Ning, Yue Cao, Yixuan Wei, Zheng Zhang, Stephen Lin, and Han Hu. Video swin transformer. In IEEE Conference on Computer Vision and Pattern Recognition,
- 2022.
- Beam search - Vijayakumar, A.K., Cogswell, M., Selvaraju, R.R., Sun, Q., Lee, S., Crandall, D., Batra, D.: Diverse beam search: Decoding diverse solutions from neural sequence models. arXiv preprint arXiv:1610.02424 (2016)
- ViT - Dosovitskiy, A., Beyer, L., Kolesnikov, A., Weissenborn, D., Zhai, X., Unterthiner, T., Dehghani, M., Minderer, M., Heigold, G., Gelly, S., et al.: An image is worth 16x16 words: Transformers for image recognition at scale. International Conference on Learning Representations (2021)
- Transformer - Vaswani, A., Shazeer, N., Parmar, N., Uszkoreit, J., Jones, L., Gomez, A.N., Kaiser, Ł., P ., Polosukhin, I.: Attention is all you need. Advances on Neural Information Processing Systems (2017)
- AdamW - Loshchilov, I., Hutter, F.: Decoupled weight decay regularization. arXiv preprint arXiv:1711.05101 (2017)

- Cosine scheduler - Loshchilov, I., Hutter, F.: Sgdr: Stochastic gradient descent with warm restarts. arXiv preprint arXiv:1608.03983 (2016)
- MSRVTT - Xu, J., Mei, T., Yao, T., Rui, Y.: MSR-VTT: A large video description dataset for bridging video and language. In: IEEE Conference on Computer Vision and Pattern Recognition (2016)
- MSVD - Chen, D., Dolan, W.B.: Collecting highly parallel data for paraphrase evaluation. In: Annual meeting of the association for computational linguistics: human language technologies (2011)
- DiDemo - Anne Hendricks, L., Wang, O., Shechtman, E., Sivic, J., Darrell, T., Russell, B.: Localizing moments in video with natural language. In: IEEE International Conference on Computer Vision (2017)
- AVA - Gu, C., Sun, C., Ross, D.A., Vondrick, C., Pantofaru, C., Li, Y., Vijayanarasimhan, S., Toderici, G., Ricco, S., Sukthankar, R., et al.: AVA: A video dataset of spatio-temporally localized atomic visual actions. In: IEEE Conference on Computer Vision and Pattern Recognition (2018)
- Something-Else - Materzynska, J., Xiao, T., Herzig, R., Xu, H., Wang, X., Darrell, T.: Something-else: Compositional action recognition with spatial-temporal interaction networks. In: IEEE Conference on Computer Vision and Pattern Recognition (2020)
- Charades - Sigurdsson, G.A., Gupta, A., Schmid, C., Farhadi, A., Alahari, K.: Charadesego: A large-scale dataset of paired third and first person videos. arXiv preprint arXiv:1804.09626 (2018).

## Claims

**1.** A computer-implemented method for generating a training dataset for training a vision-language machine learning, ML, model to perform action recognition, the method comprising:

generating (S100) a taxonomy of human activities, wherein the taxonomy comprises a plurality of human activity types that are organised into a hierarchy, wherein generating the taxonomy of human activities comprises:

generating, using a large language model, LLM, the plurality of human activity types; and
organising, using the LLM, the generated plurality of human activity types into the hierarchy;

generating (S102), for each human activity type of the plurality of human activity types in the taxonomy, a set of textual queries;
retrieving (S104), from a multi-modal dataset, a plurality of image-text pairs using the generated set of textual queries, wherein the image in each image-text pair depicts a specific human activity type and the text in each image-text pair represents a caption for the image;
generating (S106), using a machine learning, ML, model, at least one additional caption for each image of the retrieved image-text pairs, wherein the at least one additional caption comprises text describing a different aspect of the image to the text of the image-text pair; and
augmenting (S108), for each retrieved image-text pair, the image-text pair with the generated at least one additional caption, and thereby generating the training dataset.

**2.** The method as claimed in claim 1 further comprising:

obtaining at least one category of human activity types; and
prompting, using the obtained at least one category, the LLM to generate the plurality of human activity types.

**3.** The method as claimed in claim 2 wherein prompting the LLM comprises:

prompting the LLM to generate a list of popular human activity types for each category of the obtained at least one category; and/or
prompting, using each letter of an alphabet, the LLM to generate a list of human activity types for each category of the obtained at least one category.

**4.** The method as claimed in claim 3 wherein prompting the LLM further comprises:
prompting the LLM to generate at least one synonym for each generated human activity type in the list.

**5.** The method as claimed in claim 4 wherein prompting the LLM to generate at least one synonym comprises prompting the LLM to generate a pre-defined maximum number of synonyms for each generated human activity type.

**6.** The method as claimed in any of claims 2 to 5 wherein prompting the LLM further comprises:
prompting the LLM to generate, for each activity verb in a set of activity verbs, at least one human activity type that is composed of the activity verb.

**7.** The method as claimed in any of claims 2 to 6 wherein prompting the LLM further comprises:
prompting the LLM to generate at least one sub-type activity for each generated human activity type.

**8.** The method as claimed in any preceding claim wherein generating, for each human activity type of the plurality of human activity types in the taxonomy, a set of textual queries comprises:
generating the set of textual queries by combining each human activity type of the plurality of human activity types with a template from a set of predefined query templates.

**9.** The method as claimed in any preceding claim wherein generating, for each human activity type of the plurality of human activity types in the taxonomy, a set of textual queries comprises:
prompting, for each human activity type, the LLM to generate a textual phrase that represents a scenario involving the human activity type.

**10.** The method as claimed in any preceding claim wherein retrieving (S104), from a multimodal dataset, a plurality of image-text pairs using the generated set of textual queries comprises, for each textual query:

generating an embedding vector for the textual query; and
retrieving, from the multi-modal dataset, at least one image, where the at least one image has an embedding vector that is similar to the embedding vector of the textual query.

**11.** The method as claimed in any preceding claim further comprising:
filtering the plurality of image-text pairs retrieved from the multi-modal dataset, by applying a text complexity filter to remove image-text pairs that have text having a low complexity score.

**12.** A computer-implemented method for training a vision-language machine learning, ML, model to perform action recognition, the method comprising:

obtaining (S200) a vision-language ML model;
obtaining (S202) a training dataset generated using the method of any of claims 1 to 9; and
training (S204) the vision-language ML model to perform action recognition using the training dataset.

**13.** The method as claimed in claim 12 further comprising:

freezing (S206) a subset of parameters of the vision-language ML model following the training using the obtained training dataset;
obtaining (S208) a further training dataset comprising a plurality of videos; and
further training (S210) a remaining subset of parameters of the vision-language ML model using the further training dataset.

**Patentansprüche**

**1.** Computerimplementiertes Verfahren zum Erzeugen eines Trainingsdatensatzes zum Trainieren eines Vision-Sprache-Maschinenlern-, ML-Modells, um Aktionserkennung durchzuführen, wobei das Verfahren Folgendes umfasst:
Erzeugen (S100) einer Taxonomie menschlicher Aktivitäten, wobei die Taxonomie eine Vielzahl von menschlichen Aktivitätstypen umfasst, die in einer Hierarchie organisiert ist, wobei das Erzeugen der Taxonomie menschlicher Aktivitäten Folgendes umfasst:

Erzeugen, unter Verwendung eines großen Sprachmodells, LLM, der Vielzahl von menschlichen Aktivitätstypen; und
Organisieren, unter Verwendung des LLM, der erzeugten Vielzahl von menschlichen Aktivitätstypen in der Hierarchie;
Erzeugen (S102), für jeden menschlichen Aktivitätstyp aus der Vielzahl von menschlichen Aktivitätstypen in der Taxonomie, eines Satzes von Textabfragen;
Abrufen (S104), aus einem multimodalen Datensatz, einer Vielzahl von Bild-Text-Paaren unter Verwendung des erzeugten Satzes von Textabfragen, wobei das Bild in jedem Bild-Text-Paar einen spezifischen menschlichen Aktivitätstyp darstellt und der Text in jedem Bild-Text-Paar eine Beschriftung für das Bild repräsentiert;
Erzeugen (S106), unter Verwendung eines Maschinenlern-, ML-Modells, von zumindest einer zusätzlichen Beschriftung für jedes Bild der abgerufenen Bild-Text-Paare, wobei die zumindest eine zusätzliche Beschriftung Text umfasst, der einen anderen Aspekt des Bildes als den Text des Bild-Text-Paares beschreibt; und
Vergrößern (S108), für jedes abgerufene Bild-Text-Paar, des Bild-Text-Paares mit der erzeugten zumindest einen zusätzlichen Beschriftung, und dadurch Erzeugen des Trainingsdatensatzes.

**2.** Verfahren nach wie in Anspruch 1 beansprucht, ferner umfassend:

Erhalten von zumindest einer Kategorie menschlicher Aktivitätstypen; und
Auffordern, unter Verwendung der erhaltenen zumindest einen Kategorie, des LLM, die Vielzahl von menschlichen Aktivitätstypen zu erzeugen.

**3.** Verfahren wie in Anspruch 2 beansprucht, wobei das Auffordern des LLM Folgendes umfasst:

Auffordern des LLM, eine Liste von beliebten menschlichen Aktivitätstypen für jede Kategorie der erhaltenen zumindest einen Kategorie zu erzeugen; und/oder

Auffordern, unter Verwendung jedes Buchstabens eines Alphabets, des LLM, eine Liste von menschlichen Aktivitätstypen für jede Kategorie der erhaltenen zumindest einen Kategorie zu erzeugen.

**4.** Verfahren wie in Anspruch 3 beansprucht, wobei das Auffordern des LLM ferner Folgendes umfasst: Auffordern des LLM, zumindest ein Synonym für jeden erzeugten menschlichen Aktivitätstyp in der Liste zu erzeugen.

**5.** Verfahren wie in Anspruch 4 beansprucht, wobei das Auffordern des LLM, zumindest ein Synonym zu erzeugen, Auffordern des LLM, eine vordefinierte maximale Anzahl an Synonymen für jeden erzeugten menschlichen Aktivitätstyp zu erzeugen, umfasst.

**6.** Verfahren wie in einem der Ansprüche 2 bis 5 beansprucht, wobei das Auffordern des LLM ferner Folgendes umfasst: Auffordern des LLM, für jedes Aktivitätsverb in einem Satz von Aktivitätsverben zumindest einen menschlichen Aktivitätstyp zu erzeugen, der aus dem Aktivitätsverb besteht.

**7.** Verfahren wie in einem der Ansprüche 2 bis 6 beansprucht, wobei das Auffordern des LLM ferner Folgendes umfasst: Auffordern des LLM, zumindest eine Teiltypaktivität für jeden erzeugten menschlichen Aktivitätstyp zu erzeugen.

**8.** Verfahren wie in einem vorhergehenden Anspruch beansprucht, wobei das Erzeugen, für jeden menschlichen Aktivitätstyp aus der Vielzahl von menschlichen Aktivitätstypen in der Taxonomie, eines Satzes von Textabfragen Folgendes umfasst: Erzeugen des Satzes von Textabfragen durch Kombinieren jedes menschlichen Aktivitätstyps aus der Vielzahl von menschlichen Aktivitätstypen mit einer Vorlage aus einem Satz von vordefinierten Abfragevorlagen.

**9.** Verfahren wie in einem vorhergehenden Anspruch beansprucht, wobei das Erzeugen, für jeden menschlichen Aktivitätstyp aus der Vielzahl von menschlichen Aktivitätstypen in der Taxonomie, eines Satzes von Textabfragen Folgendes umfasst: Auffordern, für jeden menschlichen Aktivitätstyp, des LLM, eine Textphrase zu erzeugen, die ein Szenario repräsentiert, das den menschlichen Aktivitätstyp involviert.

**10.** Verfahren wie in einem vorhergehenden Anspruch beansprucht, wobei das Abrufen (S104), aus einem multimodalen Datensatz, einer Vielzahl von Bild-Text-Paaren unter Verwendung des erzeugten Satzes von Textabfragen für jede Textabfrage Folgendes umfasst:

Erzeugen eines Einbettungsvektors für die Textabfrage; und

Abrufen, aus dem multimodalen Datensatz, von zumindest einem Bild, wobei das zumindest eine Bild einen Einbettungsvektor aufweist, der dem Einbettungsvektor der Textabfrage ähnlich ist.

**11.** Verfahren wie in einem vorhergehenden Anspruch beansprucht, ferner umfassend: Filtern der Vielzahl von Bild-Text-Paaren, die aus dem multimodalen Datensatz abgerufen wird, durch Anwenden eines Textkomplexitätsfilters, um Bild-Text-Paare zu entfernen, die Text aufweisen, der eine niedrige Komplexitätsbewertung aufweist.

**12.** Computerimplementiertes Verfahren zum Trainieren eines Vision-Sprache-Maschinenlern-, ML-Modells, um Aktionserkennung durchzuführen, wobei das Verfahren Folgendes umfasst:

Erhalten (S200) eines Vision-Sprache-ML-Modells;

Erhalten (S202) eines Trainingsdatensatzes, der unter Verwendung des Verfahrens nach einem der Ansprüche 1 bis 9 erzeugt wird; und

Trainieren (S204) des Vision-Sprache-ML-Modells, um Aktionserkennung durchzuführen, unter Verwendung des Trainingsdatensatzes.

**13.** Verfahren wie in Anspruch 12 beansprucht, ferner umfassend:

Einfrieren (S206) eines Teilsatzes von Parametern des Vision-Sprache-ML-Modells nach dem Training unter Verwendung des erhaltenen Trainingsdatensatzes;

Erhalten (S208) eines weiteren Trainingsdatensatzes, der eine Vielzahl von Videos umfasst; und

weiteres Trainieren (S210) eines übrigen Teilsatzes von Parametern des Vision-Sprache-ML-Modells unter Verwendung des weiteren Trainingsdatensatzes.

## Revendications

**1.** Procédé mis en œuvre par ordinateur permettant la génération d'un ensemble de données d'entraînement en vue de l'entraînement d'un modèle d'apprentissage automatique, ML, vision-langage à réaliser une reconnaissance d'action, le procédé comprenant :
la génération (S100) d'une taxonomie des activités humaines, ladite taxonomie comprenant une pluralité de types d'activité humaine qui sont organisés en une hiérarchie, ladite génération de la taxonomie des activités humaines comprenant :

la génération, à l'aide d'un grand modèle de langage, LLM, de la pluralité de types d'activité humaine ; et
l'organisation, à l'aide du LLM, de la pluralité générée de types d'activité humaine dans la hiérarchie ;
la génération (S102), pour chaque type d'activité humaine de la pluralité de types d'activité humaine dans la taxonomie, d'un ensemble d'interrogations textuelles ;
la récupération (S104), à partir d'un ensemble de données multimodal, d'une pluralité de paires image-texte à l'aide de l'ensemble généré d'interrogations textuelles, ladite image dans chaque paire image-texte représentant un type d'activité humaine spécifique et ledit texte dans chaque paire image-texte représentant une légende pour l'image ;
la génération (S106), à l'aide d'un modèle d'apprentissage automatique, ML, d'au moins une légende supplémentaire pour chaque image des paires image-texte récupérées, ladite au moins une légende supplémentaire comprenant un texte décrivant un aspect différent de l'image par rapport au texte de la paire image-texte ; et
l'augmentation (S108), pour chaque paire image-texte récupérée, de la paire image-texte avec l'au moins une légende supplémentaire générée, et ainsi la génération de l'ensemble de données d'entraînement.

**2.** Procédé selon la revendication 1, comprenant en outre :

l'obtention d'au moins une catégorie de types d'activité humaine ; et
l'invitation du LLM, à l'aide de l'au moins une catégorie obtenue, à générer la pluralité de types d'activité humaine.

**3.** Procédé selon la revendication 2, ladite invitation du LLM comprenant :

l'invitation du LLM à générer une liste de types d'activité humaine populaires pour chaque catégorie de l'au moins une catégorie obtenue ; et/ou
l'invitation du LLM, à l'aide de chaque lettre d'un alphabet, à générer une liste de types d'activité humaine pour chaque catégorie de l'au moins une catégorie obtenue.

**4.** Procédé selon la revendication 3, ladite invitation du LLM comprenant :
l'invitation du LLM à générer au moins un synonyme pour chaque type d'activité humaine généré dans la liste.

**5.** Procédé selon la revendication 4, ladite invitation du LLM à générer au moins un synonyme comprenant l'invitation du LLM à générer un nombre maximal prédéfini de synonymes pour chaque type d'activité humaine généré.

**6.** Procédé selon l'une quelconque des revendications 2 à 5, ladite invitation du LLM comprenant en outre :
l'invitation du LLM à générer, pour chaque verbe d'activité dans un ensemble de verbes d'activité, au moins un type d'activité humaine composé du verbe d'activité.

**7.** Procédé selon l'une quelconque des revendications 2 à 6, ladite invitation du LLM comprenant en outre :
l'invitation du LLM à générer au moins une activité de sous-type pour chaque type d'activité humaine généré.

**8.** Procédé selon une quelconque revendication précédente, ladite génération, pour chaque type d'activité humaine de la pluralité de types d'activité humaine dans la taxonomie, d'un ensemble d'interrogations textuelles comprenant :
la génération de l'ensemble d'interrogations textuelles en combinant chaque type d'activité humaine de la pluralité de types d'activité humaine avec un modèle à partir d'un ensemble de modèles d'interrogation prédéfinis.

**9.** Procédé selon une quelconque revendication précédente, ladite génération, pour chaque type d'activité humaine de la pluralité de types d'activité humaine dans la taxonomie, d'un ensemble d'interrogations textuelles comprenant :
l'invitation du LLM, pour chaque type d'activité humaine, à générer une phrase textuelle représentant un scénario impliquant le type d'activité humaine.

**10.** Procédé selon une quelconque revendication précédente, ladite récupération (S104), à partir d'un ensemble de données multimodal, d'une pluralité de paires image-texte à l'aide de l'ensemble généré d'interrogations textuelles comprenant, pour chaque interrogation textuelle :

la génération d'un vecteur d'intégration pour l'interrogation textuelle ; et
la récupération, à partir de l'ensemble de données multimodal, d'au moins une image, où l'au moins une image possède un vecteur d'intégration qui est similaire au vecteur d'intégration de l'interrogation textuelle.

**11.** Procédé selon une quelconque revendication précédente comprenant en outre :
le filtrage de la pluralité de paires image-texte récupérées à partir de l'ensemble de données multimodal, en appliquant un filtre de complexité de texte pour supprimer les paires image-texte qui possèdent un texte possédant un score de complexité faible.

**12.** Procédé mis en œuvre par ordinateur permettant d'entraîner un modèle d'apprentissage automatique, ML, vision-langage à réaliser une reconnaissance d'action, le procédé comprenant :

l'obtention (S200) d'un modèle ML vision-langage ;
l'obtention (S202) d'un ensemble de données d'entraînement généré à l'aide du procédé de l'une quelconque des revendications 1 à 9 ; et
l'entraînement (S204) du modèle ML vision-langage pour réaliser la reconnaissance d'action à l'aide de l'ensemble de données d'entraînement.

**13.** Procédé selon la revendication 12, comprenant en outre :

le gel (S206) d'un sous-ensemble de paramètres du modèle ML vision-langage à la suite de l'entraînement à l'aide de l'ensemble de données d'entraînement obtenu ;
l'obtention (S208) d'un ensemble de données d'entraînement supplémentaire comprenant une pluralité de vidéos ; et
l'entraînement (S210) en outre d'un sous-ensemble restant de paramètres du modèle ML vision-langage à l'aide de l'ensemble de données d'entraînement supplémentaire.

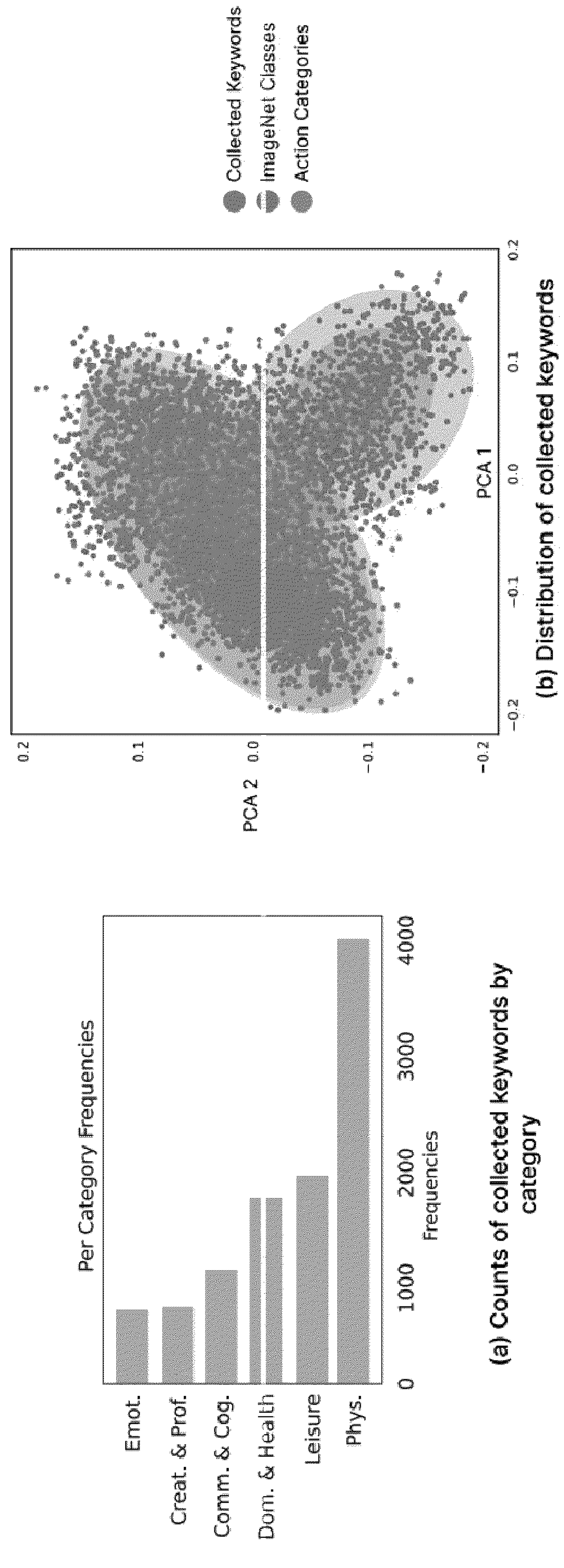


(a) Counts of collected keywords by category

(b) Distribution of collected keywords

FIGURE 1

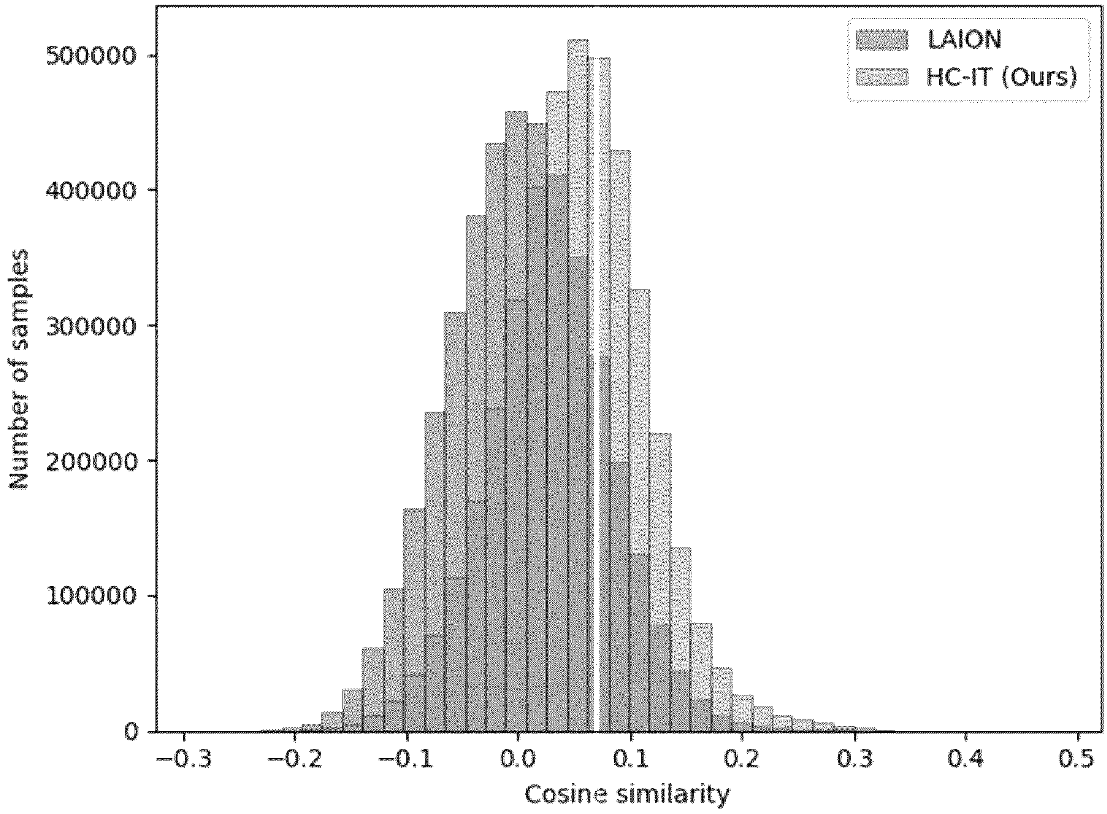


FIGURE 2

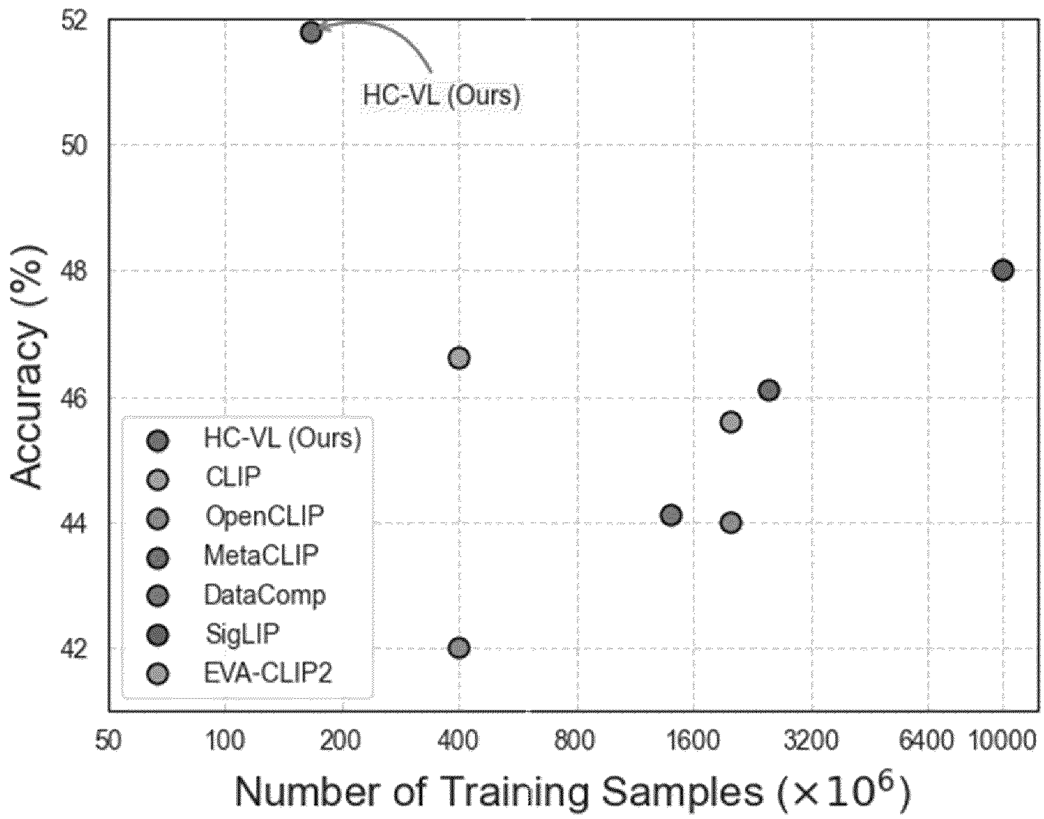


FIGURE 3

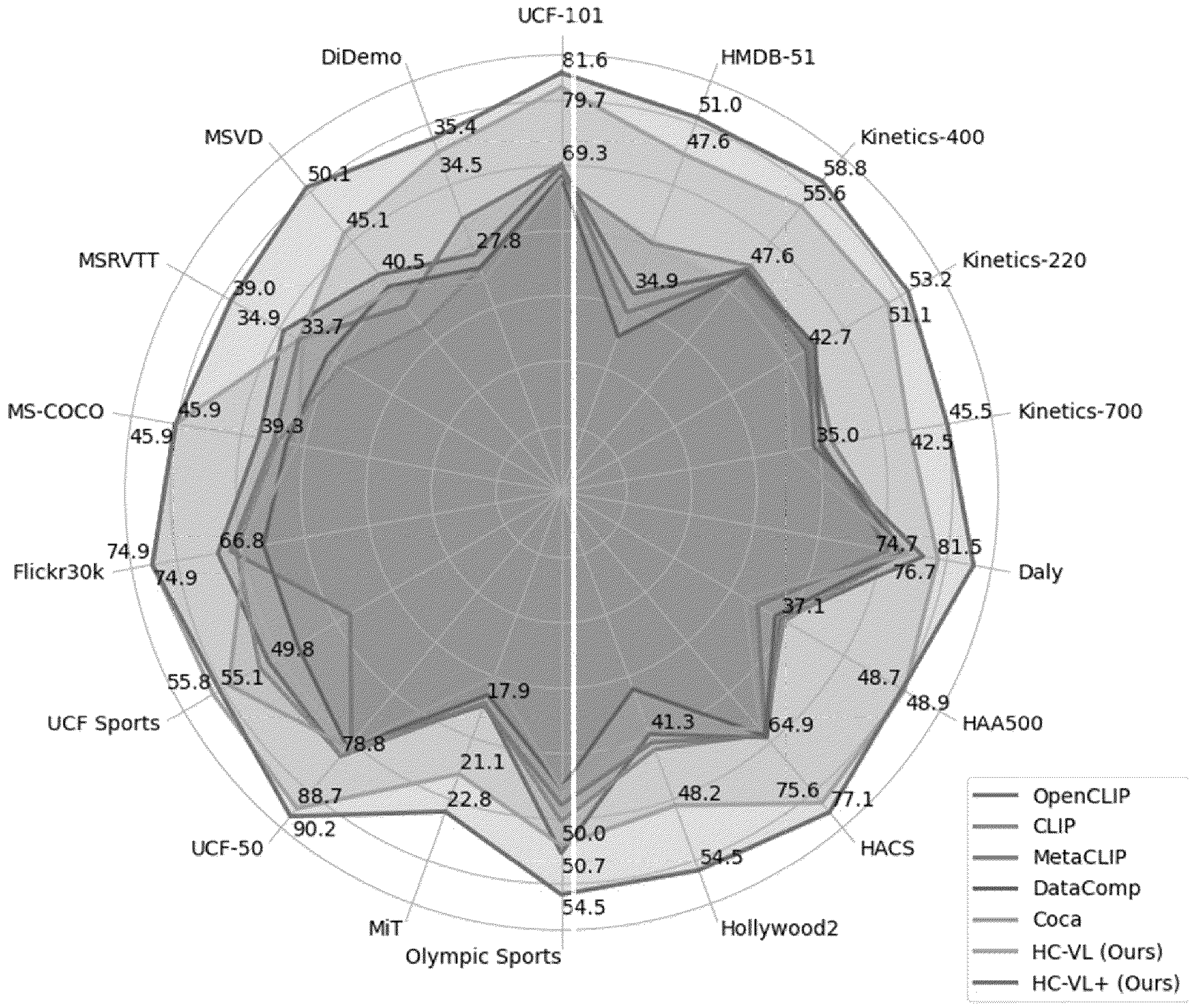
UCF-101
81.6
79.7
69.3
HMDB-51
51.0
47.6
34.9
Kinetics-400
58.8
55.6
47.6
Kinetics-220
53.2
51.1
42.7
Kinetics-700
45.5
42.5
35.0
Daly
74.7
81.5
76.7
37.1
HAA500
48.7
48.9
64.9
HACS
75.6
77.1
41.3
48.2
54.5
Hollywood2
50.0
50.7
54.5
Olympic Sports
MiT
17.9
21.1
22.8
UCF-50
88.7
90.2
78.8
UCF Sports
55.8
55.1
49.8
Flickr30k
74.9
74.9
66.8
MS-COCO
45.9
45.9
39.3
MSRVTT
39.0
34.9
33.7
MSVD
50.1
45.1
40.5
DiDemo
35.4
34.5
27.8
OpenCLIP
CLIP
MetaCLIP
DataComp
Coca
HC-VL (Ours)
HC-VL+ (Ours)

FIGURE 4

| Method | Flicrk30k | | MS-COCO | |
|---|---|---|---|---|
| | T2I | I2T | T2I | I2T |
| ViT-B/32 architecture | | | | |
| OpenCLIP (400M) [23] | 59.7/90.3 | 78.1/96.6 | 34.2/70.6 | 52.3/84.3 |
| OpenCLIP (2B) [23] | 66.8/93.1 | 84.1/98.3 | 39.3/75.6 | 56.3/87.1 |
| OpenCLIP (5B) [23] | 64.5/91.7 | 82.7/97.8 | 37.8/73.5 | 53.5/86.4 |
| CLIP [53] | 58.8/90.0 | 78.9/98.2 | 30.4/66.9 | 50.1/83.5 |
| MetaCLIP [69] | 65.2/92.7 | 80.8/97.3 | 38.1/74.3 | 55.2/86.5 |
| CoCa [73] | 63.4/91.4 | 81.6/97.4 | 36.2/71.8 | 54.6/85.6 |
| DataComp [17] | 61.1/90.9 | 79.0/96.2 | 37.1/72.7 | 53.5/86.0 |
| HC-VL (Ours) | **74.9/95.9** | **90.8/99.5** | **45.9/80.6** | **62.7/91.2** |
| ViT-B/16 architecture | | | | |
| OpenCLIP (400M) [23] | 65.7/93.0 | 83.5/98.5 | 38.3/73.9 | 55.4/86.9 |
| OpenCLIP (2B) [23] | 69.8/94.6 | 86.3/99.4 | 42.3/77.1 | 59.4/88.6 |
| CLIP [53] | 62.1/91.9 | 82.2/99.0 | 33.1/69.0 | 52.4/84.6 |
| MetaCLIP [69] | 70.7/94.5 | 85.5/98.9 | 41.3/77.0 | 59.4/87.8 |
| EVA-CLIP2 | 71.5/94.7 | 86.0/98.8 | 42.2/76.3 | 58.7/88.1 |
| SigLIP [75] | 74.7/95.6 | 89.1/99.3 | 47.8/81.0 | **65.7**/91.3 |
| DataComp [17] | 67.6/93.0 | 85.1/98.4 | 40.2/75.6 | 57.4/88.3 |
| HC-VL (Ours) | **77.8/97.4** | **92.6/99.9** | **48.6/83.1** | 64.7/**92.4** |

FIGURE 5

| Method | MSRVTT | | MSVD | | DiDemo | |
|---|---|---|---|---|---|---|
| | T2V | V2T | T2V | V2T | T2V | V2T |
| ViT-B/32 architecture | | | | | | |
| OpenCLIP (400M) [23] | 29.6/62.2 | 23.7/56.1 | 35.6/72.3 | 48.5/84.4 | 25.0/59.1 | 22.0/54.9 |
| OpenCLIP (2B) [23] | 34.9/67.8 | 28.1/60.6 | 40.5/77.3 | 56.4/88.0 | 27.8/65.1 | 24.8/59.3 |
| OpenCLIP (5B) [23] | 33.4/66.1 | 28.0/60.4 | 40.6/77.1 | 55.2/86.3 | 27.4/64.0 | 24.6/58.9 |
| CLIP [53] | 30.3/65.0 | 26.3/62.3 | 34.8/73.4 | 57.8/90.8 | 26.9/63.9 | 19.4/55.3 |
| MetaCLIP [69] | 33.7/66.6 | 30.1/64.7 | 37.8/75.9 | 51.9/85.9 | 30.1/64.7 | 20.2/55.3 |
| CoCa [73] | 33.4/67.1 | 25.2/57.4 | 38.8/76.3 | 52.6/87.0 | 26.1/57.3 | 24.7/60.0 |
| DataComp [17] | 31.5/63.9 | 24.2/54.5 | 39.2/76.5 | 54.6/88.9 | 26.9/60.4 | 23.3/56.8 |
| HC-VL (Ours) | 33.7/68.7 | 28.5/60.7 | 45.1/82.5 | 64.4/92.0 | 34.5/68.5 | 30.6/65.6 |
| HC-VL+ (Ours)* | **39.0/75.7** | **36.9/72.3** | **50.1/85.6** | **67.8/94.3** | **35.4/70.0** | **32.1/66.8** |
| ViT-B/16 architecture | | | | | | |
| OpenCLIP (400M) [23] | 32.5/66.9 | 24.4/57.7 | 39.8/77.3 | 55.4/89.4 | 27.9/62.4 | 24.6/60.5 |
| OpenCLIP (2B) [23] | 36.7/69.7 | 27.7/58.3 | 41.5/77.8 | 55.3/90.3 | 31.2/65.9 | 27.1/61.5 |
| CLIP [53] | 33.4/65.6 | 30.5/64.6 | 39.0/76.2 | 62.6/92.9 | 30.7/63.5 | 23.3/54.4 |
| MetaCLIP [69] | 36.0/68.2 | 29.6/61.1 | 43.5/81.1 | 62.1/91.7 | 30.6/65.3 | 26.5/60.1 |
| EVA-CLIP2 | 35.1/69.7 | 27.3/58.3 | 44.2/81.7 | 61.0/91.7 | 35.2/67.7 | 30.1/63.9 |
| SigLIP [75] | 34.6/67.0 | 30.9/63.2 | 47.0/82.1 | 64.6/94.1 | 30.7/65.3 | 27.0/60.5 |
| DataComp [17] | 34.2/64.8 | 26.4/57.7 | 42.5/79.3 | 56.9/91.0 | 30.3/62.9 | 27.7/60.8 |
| HC-VL (Ours) | 36.0/69.9 | 30.0/62.1 | 45.6/84.3 | 66.1/94.3 | 36.1/70.0 | 31.2/66.2 |
| HC-VL+ (Ours)* | **40.8/74.0** | **37.5/74.1** | **52.0/86.9** | **68.4/95.1** | **36.7/70.8** | **33.3/67.2** |

FIGURE 6

| | Dataset | OpenCLIP [23] 400M | 2B | 5B | MetaCLIP [69] | DataComp [17] | Coca [73] | CLIP [53] | **HC-VL** (Ours) | **HC-VL+** (Ours) |
|---|---|---|---|---|---|---|---|---|---|---|
| ViT-B/32 | UCF-101 | 62.7 (87.1) | 69.3 (92.1) | 64.8 (91.1) | 69.4 (91.1) | 67.8 (89.2) | 67.4 (90.8) | 67.6 (91.3) | 79.7 (96.9) | **81.6 (97.0)** |
| | HMDB-51 | 30.2 (55.6) | 34.9 (63.0) | 34.5 (63.2) | 33.2 (62.0) | 31.7 (61.7) | 34.2 (64.2) | 39.5 (67.3) | 47.6 (73.8) | **51.0 (77.9)** |
| | Kinetics-400 | 40.3 (65.6) | 47.6 (73.3) | 45.9 (71.6) | 46.9 (72.2) | 47.2 (71.5) | 45.4 (70.9) | 48.0 (74.7) | 55.6 (79.7) | **58.8 (82.6)** |
| | Kinetics-220 | 36.7 (59.6) | 42.7 (68.4) | 42.1 (68.6) | 42.9 (69.0) | 43.6 (68.2) | 40.6 (66.2) | 43.2 (69.9) | 51.1 (77.1) | **53.2 (79.3)** |
| | Kinetics-700 | 29.4 (52.2) | 35.0 (59.9) | 33.8 (58.0) | 35.7 (60.3) | 35.5 (58.4) | 33.1 (56.7) | 36.5 (61.7) | 42.5 (67.6) | **45.5 (71.4)** |
| | Daly | 75.3 (**98.6**) | 74.7 (96.6) | 70.5 (97.3) | 69.9 (95.9) | 71.9 (96.6) | 72.6 (97.2) | 71.9 (97.9) | 76.7 (**98.6**) | **81.5** (97.8) |
| | HAA500 | 30.0 (57.7) | 37.1 (65.6) | 34.8 (63.1) | 34.9 (64.1) | 36.6 (63.6) | 33.7 (62.7) | 37.4 (66.5) | **48.9** (77.7) | 48.7 (**78.1**) |
| | HACS | 57.3 (84.3) | 64.9 (89.4) | 63.9 (88.4) | 64.7 (88.6) | 64.6 (88.8) | 63.6 (89.0) | 64.4 (89.8) | 75.6 (94.7) | **77.1 (95.8)** |
| | Hollywood2* | 32.9 | 41.3 | 42.6 | 42.1 | 36.9 | 40.3 | 42.8 | 48.2 | **54.5** |
| | Olympic Sports | 46.3 (86.6) | 50.7 (90.3) | 48.5 (83.6) | 46.3 (84.3) | 44.8 (86.6) | 44.8 (83.6) | 47.8 (88.1) | 50.0 (90.3) | **54.5 (94.0)** |
| | MiT | 15.1 (32.4) | 17.9 (37.5) | 17.2 (36.4) | 18.0 (37.9) | 17.5 (36.2) | 16.7 (35.3) | 17.9 (37.7) | 21.1 (43.6) | **22.8 (46.6)** |
| | AVA* | 9.1 | 9.3 | 9.5 | 11.3 | 9.3 | 9.5 | 11.3 | 13.6 | **17.1** |
| | Something-Else | 8.6 (26.5) | 10.9 (31.6) | 10.3 (30.6) | 10.7 (30.6) | 10.4 (30.5) | 9.7 (29.3) | 10.0 (29.3) | 11.1 (32.3) | **12.7/36.4** |
| | Charades* | 14.3 | 17.8 | 17.1 | 16.9 | 16.8 | 17.6 | 19.1 | 23.1 | **23.5** |
| | UCF-50 | 71.2 (89.8) | 78.8 (96.5) | 73.8 (93.3) | 76.3 (93.1) | 77.2 (94.1) | 77.1 (94.3) | 78.7 (95.2) | 88.7 (**98.8**) | **90.2 (98.8)** |
| | UCF Sports | 47.5 (83.6) | 49.8 (83.6) | 47.6 (85.3) | 41.0 (85.3) | 46.7 (85.2) | 54.1 (83.6) | 50.8 (88.5) | **55.8** (93.4) | 55.1 (**93.5**) |
| | Average | 37.9 (67.7) | 42.7 (72.9) | 41.1 (71.6) | 41.3 (71.9) | 41.1 (71.6) | 41.3 (71.8) | 42.9 (72.7) | 49.5 (76.9) | **51.7 (80.7)** |

FIGURE 7A

| | Dataset | OpenCLIP [23] 400M | OpenCLIP [23] 2B | MetaCLIP [69] | DataComp [17] | SigLIP [75] | EVA-CLIP2 [60] | CLIP [53] | **HC-VL** (Ours) | **HC-VL+** (Ours) |
|---|---|---|---|---|---|---|---|---|---|---|
| ViT-B/16 | UCF-101 | 70.4 (91.5) | 71.9 (92.4) | 76.3 (95.3) | 70.6 (91.0) | 76.0 (94.1) | 72.1 (93.0) | 71.3 (93.9) | 81.2 (97.6) | **84.0 (97.8)** |
| | HMDB-51 | 35.1 (63.5) | 36.4 (65.2) | 39.3 (68.8) | 32.8 (63.4) | 43.0 (68.2) | 37.0 (63.3) | 43.8 (70.6) | 49.1 (76.3) | **52.5 (78.8)** |
| | Kinetics-400 | 47.2 (72.8) | 49.3 (74.4) | 53.5 (78.6) | 51.1 (75.3) | 54.9 (78.9) | 52.2 (77.3) | 53.5 (78.8) | 59.5 (83.1) | **62.5 (85.6)** |
| | Kinetics-220 | 42.7 (67.3) | 43.7 (69.7) | 49.6 (75.1) | 46.9 (71.8) | 51.9 (77.3) | 48.5 (73.4) | 47.3 (73.4) | 54.2 (80.7) | **57.6 (83.3)** |
| | Kinetics-700 | 35.2 (59.1) | 36.4 (60.7) | 41.1 (66.5) | 39.0 (62.5) | 42.8 (66.7) | 40.7 (65.3) | 41.1 (66.5) | 46.1 (71.3) | **49.2 (75.4)** |
| | Daly | 68.5 (97.3) | 76.0 (96.6) | 74.6 (97.3) | 76.7 (95.9) | 77.4 (99.3) | 70.6 (98.6) | 75.3 (98.6) | 84.2 (99.3) | **87.7 (99.8)** |
| | HAA500 | 35.7 (64.8) | 39.0 (69.6) | 41.2 (72.3) | 39.0 (67.6) | 48.8 (77.4) | 41.5 (70.6) | 42.5 (70.9) | 51.1 (81.0) | **53.6 (81.7)** |
| | HACS | 64.3 (89.0) | 68.0 (91.4) | 70.5 (92.1) | 68.3 (90.7) | 72.7 (93.1) | 68.9 (91.7) | 69.9 (92.2) | 77.7 (95.8) | **80.7 (96.6)** |
| | Hollywood2* | 41.3 | 42.1 | 46.6 | 41.9 | 43.7 | 45.1 | 47.6 | 50.8 | **57.0** |
| | Olympic Sports | 45.5 (89.5) | 47.8 (85.8) | 45.5 (88.1) | 44.8 (83.6) | 52.3 (89.5) | 48.5 (89.5) | 50.8 (90.3) | 54.4 (92.5) | **58.2 (94.8)** |
| | MiT | 17.8 (37.1) | 19.3 (39.2) | 20.7 (42.6) | 19.9 (39.5) | 22.2 (43.9) | 21.1 (42.8) | 20.5 (42.4) | 23.9 (47.8) | **25.6 (50.9)** |
| | AVA* | 9.6 | 9.9 | 11.3 | 10.0 | 11.6 | 11.7 | 12.0 | 14.0 | **17.8** |
| | Something-Else | 10.1 (30.8) | 11.6 (33.1) | 10.6 (31.3) | 13.0 (34.9) | **14.1** (**38.3**) | 12.6 (34.8) | 10.8 (30.8) | 12.0 (34.5) | 13.5(36.6) |
| | Charades* | 17.5 | 19.3 | 21.6 | 19.3 | 21.8 | 21.9 | 21.0 | 24.2 | **24.5** |
| | UCF-50 | 78.5 (94.2) | 80.1 (93.4) | 83.7 (97.3) | 79.2 (94.7) | 82.0 (95.0) | 78.6 (95.6) | 81.5 (96.1) | 90.8 (99.2) | **91.3 (99.3)** |
| | UCF Sports | 52.5 (85.3) | 52.4 (86.9) | 50.8 (90.7) | 52.5 (88.5) | 52.4 (**93.4**) | 52.4 (86.8) | **57.4** (90.1) | 55.7 (91.8) | 55.8 (88.5) |
| | Average | 42.0 (72.5) | 44.0 (73.7) | 46.1 (76.6) | 44.1 (73.8) | 48.0 (78.0) | 45.2 (75.6) | 46.6 (76.5) | 51.8 (80.8) | **54.5 (82.2)** |

FIGURE 7B

| Method | HMDB-51 | UCF-101 |
|---|---|---|
| ER-ZSAR [9] | 35.3 ± 4.6 | 51.8 ± 2.9 |
| MUFI [51] | 31.0 | 60.9 |
| ActionCLIP [65] | 40.8 ± 5.4 | 58.3 ± 3.4 |
| ClipBert [28] | 21.4 ± 1.0 | 27.8 ± 0.8 |
| Frozen [4] | 27.8 ± 0.3 | 45.9 ± 1.3 |
| ViSET-96 [12] | 40.2 | 68.3 |
| BridgeFormer [18] | 37.7 ± 1.2 | 53.1 ± 1.4 |
| CLIP [53] | 43.8 | 70.6 |
| AURL [50] | 40.4 | 60.9 |
| ResT_101 [33] | 41.1 ± 3.7 | 58.7 ± 3.3 |
| X-CLIP [45] | 44.6 ± 5.2 | 72 ± 2.3 |
| X-Florence [45] | 48.4 ± 4.9 | 73.2 ± 4.2 |
| **HC-VL** (Ours) | 49.1 | 81.2 |
| **HC-VL+** (Ours) | **52.5** | **84.0** |

FIGURE 8

| Arch. | Method | HMDB-51 | | | | UCF-101 | | | | Kinetics-400 | | | |
|---|---|---|---|---|---|---|---|---|---|---|---|---|---|
| | | 2 | 4 | 8 | 16 | 2 | 4 | 8 | 16 | 2 | 4 | 8 | 16 |
| | TSM* [34] | 17.5 | 20.9 | 18.4 | 31.0 | 25.3 | 47.0 | 64.4 | 61.0 | - | - | - | - |
| | TimeSformer* [5] | 19.6 | 40.6 | 49.4 | 55.4 | 48.5 | 75.6 | 83.7 | 89.4 | - | - | - | - |
| | Swin-B* [36] | 20.9 | 41.3 | 47.9 | 56.1 | 53.3 | 74.1 | 85.8 | 88.7 | - | - | - | - |
| ViT-B/32 | X-CLIP | 48.1 | 54.7 | 57.8 | 61.4 | 76.3 | 81.0 | 85.5 | 88.7 | 52.4 | 54.2 | 57.7 | 59.2 |
| | X-OpenCLIP | 39.8 | 49.3 | 53.8 | 58.2 | 76.9 | 81.2 | 86.2 | 89.5 | 52.0 | 53.9 | 57.6 | 59.0 |
| | X-OpenCLIP (400M) | 36.8 | 43.5 | 50.1 | 54.6 | 73.6 | 77.8 | 82.5 | 86.1 | 45.2 | 47.3 | 50.6 | 53.1 |
| | **X-HC-VL** (Ours) | 51.0 | 57.4 | 59.7 | 63.8 | 85.3 | 87.9 | 90.4 | 92.1 | 60.7 | 62.3 | 64.2 | 66.5 |
| | **X-HC-VL+** (Ours) | **53.1** | **58.7** | **60.7** | **64.5** | **86.2** | **88.8** | **91.3** | **93.0** | **61.6** | **63.0** | **64.9** | **67.0** |
| ViT-B/16 | X-Florence* [45] | 51.6 | 57.8 | 64.1 | 64.2 | 84.0 | 88.5 | 92.5 | 94.8 | - | - | - | - |
| | X-CLIP [45] | 53.0 | 57.3 | 62.8 | 64.0 | 76.4 | 83.4 | 88.3 | 91.4 | 59.2 | 60.8 | 62.2 | 63.4 |
| | X-OpenCLIP | 47.7 | 53.9 | 58.2 | 60.1 | 77.0 | 83.7 | 88.6 | 92.4 | 56.1 | 57.9 | 58.6 | 60.1 |
| | X-OpenCLIP (400M) | 40.1 | 47.7 | 53.7 | 57.5 | 73.3 | 80.1 | 83.5 | 87.9 | 53.0 | 55.5 | 57.1 | 58.2 |
| | **X-HC-VL** (Ours) | 57.8 | 62.1 | 64.6 | 66.7 | 88.6 | 90.8 | 93.1 | 95.2 | 64.9 | 66.0 | 67.9 | 69.9 |
| | **X-HC-VL+** (Ours) | **58.9** | **63.0** | **65.4** | **67.3** | **89.4** | **91.5** | **93.9** | **95.6** | **65.9** | **66.8** | **68.7** | **70.5** |

FIGURE 9

| # cap. | w. scores | UCF-101 | HMDB-51 |
|---|---|---|---|
| 0 | ✗ | 79.4 | 45.4 |
| 1 | ✗ | 79.2 | 45.0 |
| 5 | ✗ | 79.4 | 46.1 |
| 5 | ✓ | **79.7** | **47.6** |

FIGURE 10

| num. | UCF-101 | | HMDB-51 | |
|---|---|---|---|---|
| samples | Top-1 | Top-5 | Top-1 | Top-5 |
| 69M | 71.7 | 92.8 | 41.4 | 69.5 |
| 135M | 78.1 | 95.2 | 43.0 | 69.8 |
| 167M | 79.4 | 96.4 | 45.4 | 71.6 |

FIGURE 11

| Method | UCF-101 | HDMB-51 | K400 |
|---|---|---|---|
| CLIP filtering | 67.8 | 32.4 | 47.2 |
| HC-IT (Ours) | 79.7 | 47.6 | 55.6 |

FIGURE 12

Generating a training dataset

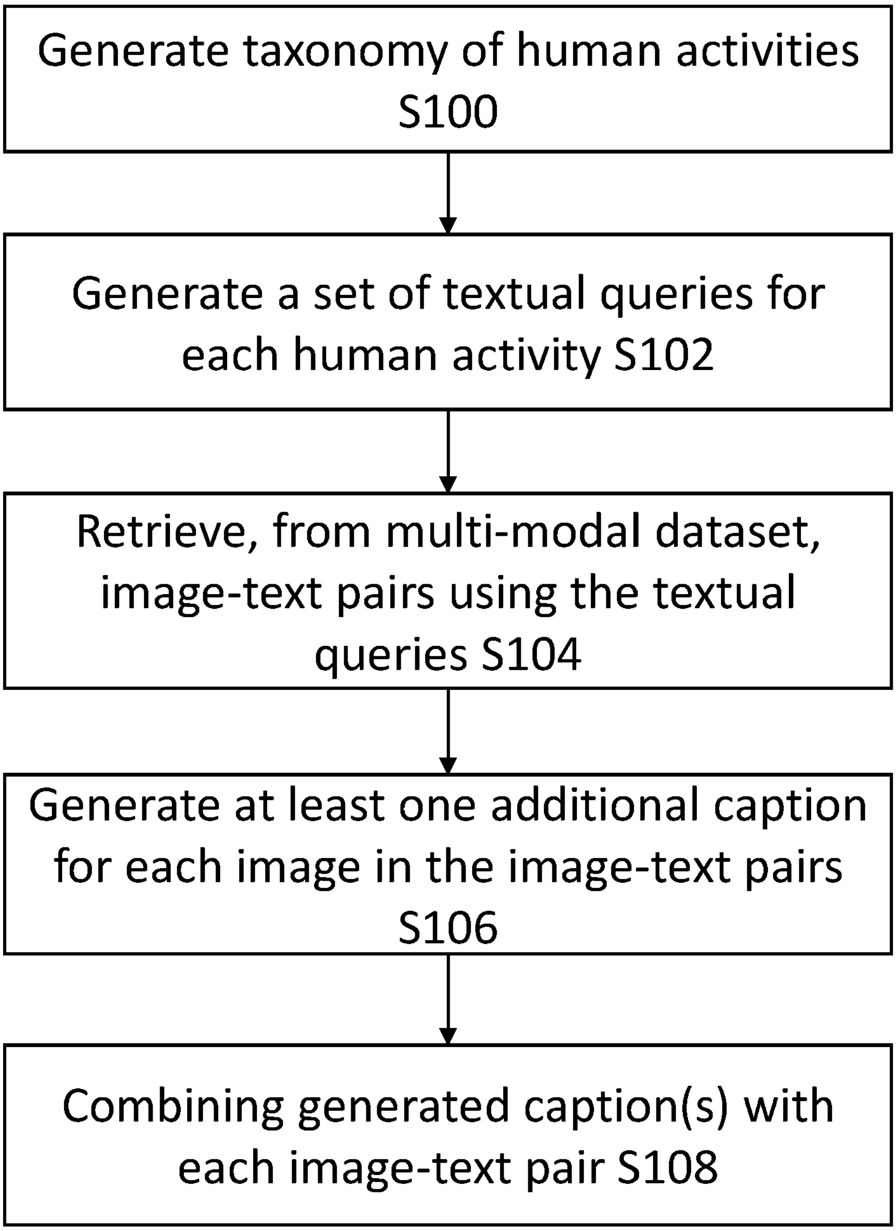


FIGURE 13

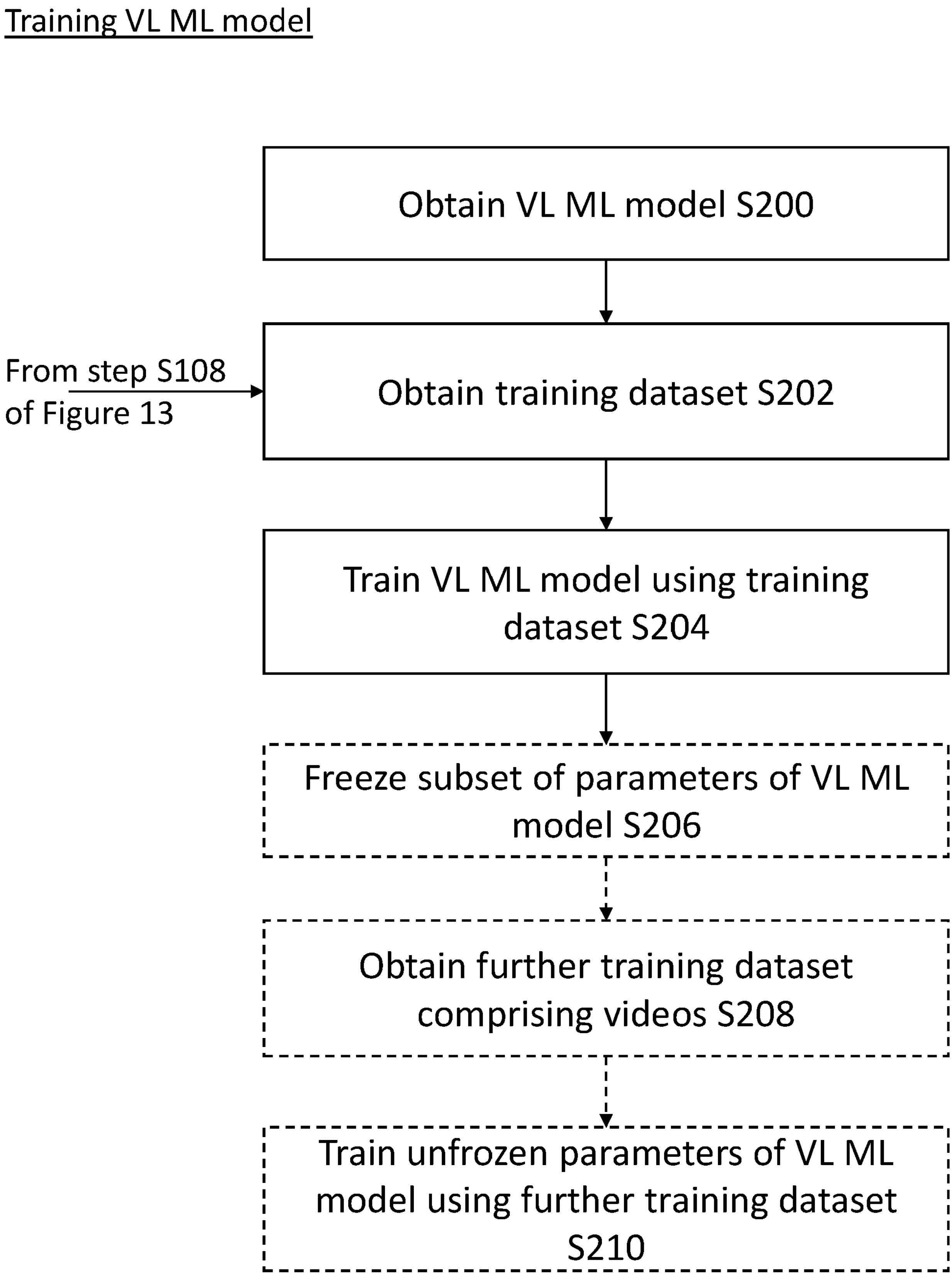
Training VL ML model
Obtain VL ML model S200
From step S108 of Figure 13
Obtain training dataset S202
Train VL ML model using training dataset S204
Freeze subset of parameters of VL ML model S206
Obtain further training dataset comprising videos S208
Train unfrozen parameters of VL ML model using further training dataset S210

FIGURE 14

Using trained VL ML model

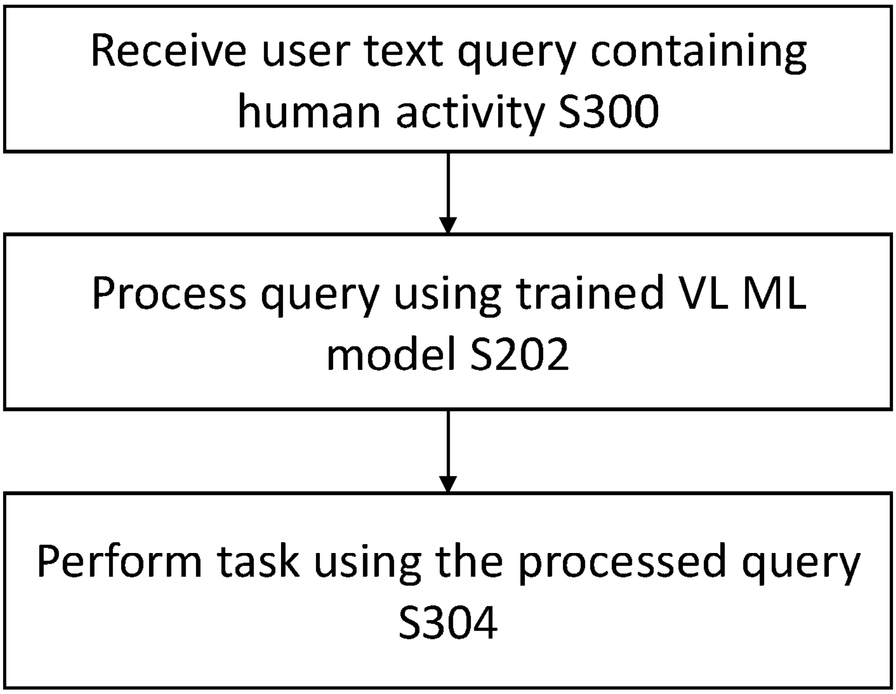


FIGURE 15

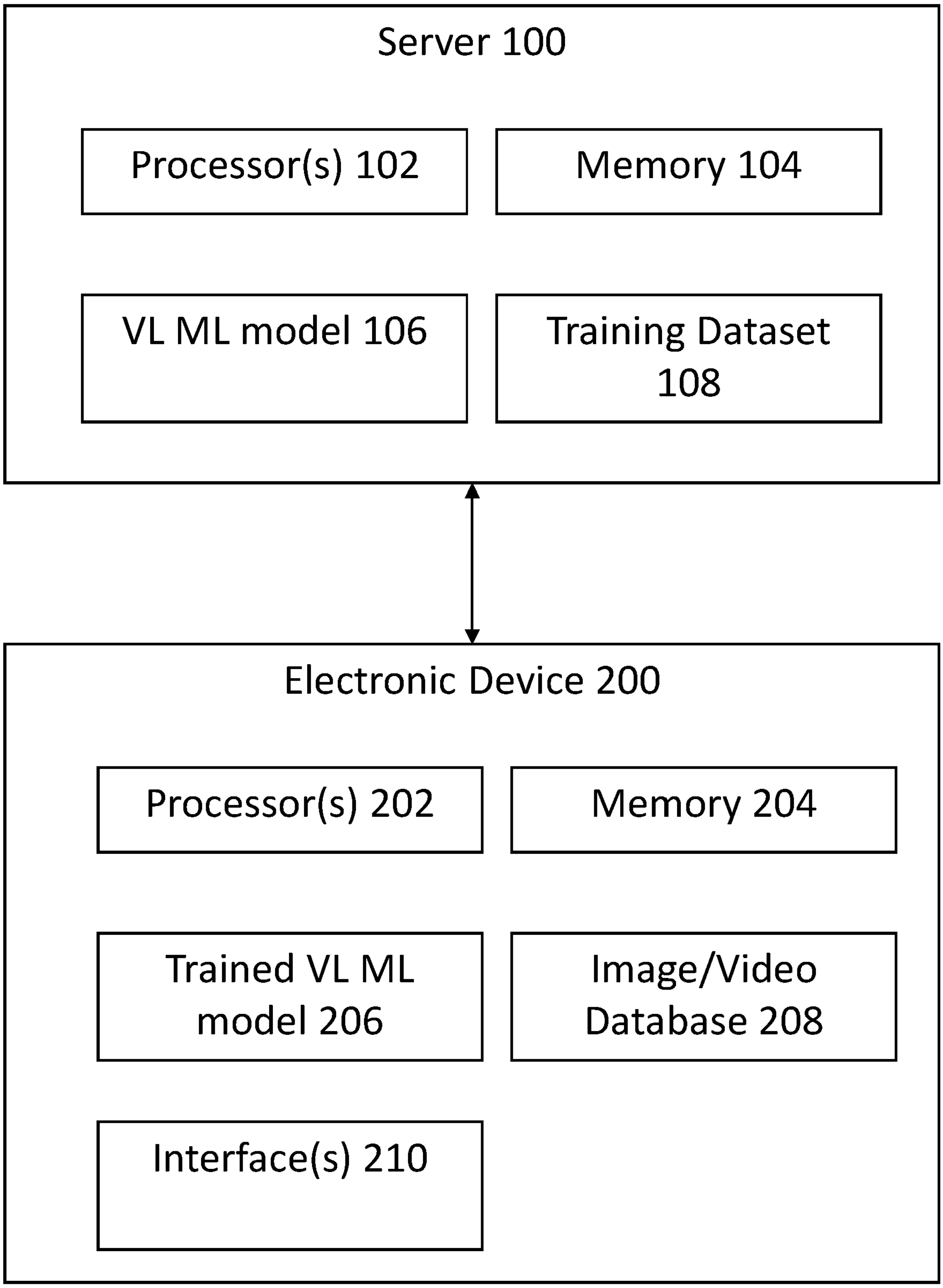
Server 100
Processor(s) 102
Memory 104
VL ML model 106
Training Dataset 108
Electronic Device 200
Processor(s) 202
Memory 204
Trained VL ML model 206
Image/Video Database 208
Interface(s) 210

FIGURE 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **YI WANG et al.** *InternVid: A Large-scale Video-Text Dataset for Multimodal Understanding and Generation*
- **CHRISTOPH SCHUHMANN et al.** *LAION-5B: An open large-scale dataset for training next generation image-text models*
- **WORTSMAN et al.** Laion-5b: An open large-scale dataset for training next generation image-text models.. *arXiv preprint arXiv:2210.08402*, 2022
- **MARTA R COSTA-JUSSA ; JAMES CROSS ; ONUR CELEBI ; MAHA EL-BAYAD ; KENNETH HEAFIELD ; KEVIN HEFFERNAN ; ELAHE KALBASSI ; JANICE LAM ; DANIEL LICHT ; JEAN MAILLARD et al.** No language left behind: Scaling human-centered machine translation.. *arXiv preprint arXiv:2207.04672*, 2022
- **MATTHEW HONNIBAL ; INES MONTANI ; SOFIE VAN LANDEGHEM ; ADRIANE BOYD.** *spaCy: Industrial-strength Natural Language Processing in Python*, 2020
- **JUNNAN LI ; DONGXU LI ; SILVIO SAVARESE ; STEVEN HOI.** BLIP-2: Bootstrapping language-image pre-training with frozen image encoders and large language models.. *arXiv preprint arXiv:2301.12597*, 2023
- **MITCHELL WORTSMAN ; ROSS WIGHTMAN ; CADE GORDON ; NICHOLAS CARLINI ; ROHAN TAORI ; ACHAL DAVE ; VAISHAAL SHANKAR ; HONGSEOK NAMKOONG ; JOHN MILLER ; HANNANEH HAJISHIRZI**. Gabriel Ilharco. *Open-CLIP*, 2021
- **ALEC RADFORD ; JONG WOOK KIM ; CHRIS HALLACY ; ADITYA RAMESH ; GABRIEL GOH ; SANDHINI AGARWAL ; GIRISH SASTRY ; AMANDA ASKELL ; PAMELA MISHKIN ; JACK CLARK et al.** Learning transferable visual models from natural language supervision. *International Conference on Machine Learning*, 2021
- **ALEXEY DOSOVITSKIY ; LUCAS BEYER ; ALEXANDER KOLESNIKOV ; DIRK WEISSENBORN ; XIAOHUA ZHAI ; THOMAS UNTERTHINER ; MOSTAFA DEHGHANI ; MATTHIAS MINDERER ; GEORG HEIGOLD ; SYLVAIN GELLY et al.** An image is worth 16x16 words: Transformers for image recognition at scale.. *International Conference on Learning Representations*, 2021
- **MATHEW MONFORT ; SOUYOUNG JIN ; ALEXANDER LIU ; DAVID HARWATH ; ROGERIO FERIS ; JAMES GLASS ; AUDE OLIVA.** Spoken moments: Learning joint audio-visual representations from video descriptions.. *IEEE Conference on Computer Vision and Pattern Recognition*, 2021
- **BOLIN NI ; HOUWEN PENG ; MINGHAO CHEN ; SONGYANG ZHANG ; GAOFENG MENG ; JIANLONG FU ; SHIMING XIANG ; HAIBIN LING.** Expanding language-image pretrained models for general video recognition.. *European Conference on Computer Vision*, 2022
- **KHURRAM SOOMRO ; AMIR ROSHAN ZAMIR ; MUBARAK SHAH.** UCF101: A dataset of 101 human actions classes from videos in the wild.. *arXiv preprint arXiv:1212.0402*, 2012
- **HILDEGARD KUEHNE ; HUEIHAN JHUANG ; ESTIBALIZ GARROTE ; TOMASO POGGIO ; THOMAS SERRE.** HMDB: a large video database for human motion recognition.. *IEEE International Conference on Computer Vision*, 2011
- **WILL KAY ; JOAO CARREIRA ; KAREN SIMONYAN ; BRIAN ZHANG ; CHLOE HILLIER ; SUDHEENDRA VIJAYANARASIMHAN ; FABIO VIOLA ; TIM GREEN ; TREVOR BACK ; PAUL NATSEV**. The Kinetics human action video dataset.. *arXiv preprint arXiv:1705.06950*, 2017
- **SHIZHE CHEN ; DONG HUANG.** Elaborative rehearsal for zero-shot action recognition.. *IEEE International Conference on Computer Vision*, 2021
- **JOAO CARREIRA ; ERIC NOLAND ; ANDRAS BANKI-HORVATH ; CHLOE HILLIER ; ANDREW ZISSERMAN.** A short note about kinetics-600.. *arXiv preprint arXiv:1808.01340*, 2018
- **JOAO CARREIRA ; ERIC NOLAND ; CHLOE HILLIER ; ANDREW ZISSERMAN.** A short note on the kinetics-700 human action dataset.. *arXiv preprint arXiv:1907.06987*, 2019
- **MATHEW MONFORT ; ALEX ANDONIAN ; BOLEI ZHOU ; KANDAN RAMAKRISHNAN ; SARAH ADEL BARGAL ; TOM YAN ; LISA BROWN ; QUANFU FAN ; DAN GUTFRUEND ; CARL VONDRICK et al.** Moments in time dataset: one million videos for event understanding.. *IEEE Transactions of Pattern Analysis and Machine Intelligence*, 2019, 1-8

- **PHILIPPE WEINZAEPFEL ; XAVIER MARTIN ; CORDELIA SCHMID.** Human action localization with sparse spatial supervision.. *arXiv preprint arXiv:1605.05197*, 2016
- **JIHOON CHUNG ; CHENG-HSIN WUU ; HSUAN-RU YANG ; YU-WING TAI ; CHI-KEUNG TANG.** Haa500: Human-centric atomic action dataset with curated videos.. *IEEE International Conference on Computer Vision*, 2021
- **HANG ZHAO ; ZHICHENG YAN ; LORENZO TORRESANI ; ANTONIO TORRALBA.** Hacs: Human action clips and segments dataset for recognition and temporal localization.. *arXiv preprint. arXiv:1712.09374, 2019.5*
- Actions in context.. **MARCIN MARSZALEK ; IVAN LAPTEV ; CORDELIA SCHMID.** 2009 IEEE Conference on Computer Vision and Pattern Recognition. IEEE, 2009, 2929-2936
- **JUAN CARLOS NIEBLES ; CHIH-WEI CHEN ; LI FEI-FEI.** Modeling temporal structure of decomposable motion segments for activity classification.. *European Conference on Computer Vision*, 2010
- **KISHORE K REDDY ; MUBARAK SHAH.** Recognizing 50 human action categories of web videos.. *Machine vision and applications*, 2013, vol. 24 (5), 971-981
- Action recognition in realistic sports videos. **KHURRAM SOOMRO ; AMIR R ZAMIR.** Computer vision in sports. Springer, 2015, 181-208
- **CHRISTOPH SCHUHMANN ; RICHARD VENCU ; ROMAIN BEAUMONT ; ROBERT KACZMARCZYK ; CLAYTON MULLIS ; AARUSH KATTA ; THEO COOMBES ; JENIA JITSEV ; ARAN KOMATSUZAKI.** Laion-400m: Open dataset of clip-filtered 400 million image-text pairs. *arXiv preprint arXiv:2111.02114*, 2021
- **XUN XU ; TIMOTHY M HOSPEDALES ; SHAOGANG GONG.** Multi-task zero-shot action recognition with prioritised data augmentation.. *European Conference on Computer Vision*, 2016
- **QIAN WANG ; KE CHEN.** Alternative semantic representations for zero-shot human action recognition.. *Joint European Conference on Machine Learning and Knowledge Discovery in Databases*, 2017
- **JIE QIN ; LI LIU ; LING SHAO ; FUMIN SHEN ; BINGBING NI ; JIAXIN CHEN ; YUNHONG WANG.** Zero-shot action recognition with error-correcting output codes.. *IEEE Conference on Computer Vision and Pattern Recognition*, 2017
- **YI ZHU ; YANG LONG ; YU GUAN ; SHAWN NEWSAM ; LING SHAO.** Towards universal representation for unseen action recognition.. *IEEE Conference on Computer Vision and Pattern Recognition*, 2018
- **JUNYU GAO ; TIANZHU ZHANG ; CHANGSHENG XU.** I know the relationships: Zero-shot action recognition via two-stream graph convolutional networks and knowledge graphs.. *AAAI Conference on Artificial Intelligence*, 2019
- **BIAGIO BRATTOLI ; JOSEPH TIGHE ; FEDOR ZHDANOV ; PIETRO PERONA ; KRZYSZTOF CHALUPKA.** Rethinking zero-shot video classification: End-to-end training for realistic applications. *IEEE Conference on Computer Vision and Pattern Recognition*, 2020
- **ZHAOFAN QIU ; TING YAO ; CHONG-WAH NGO ; XIAO-PING ZHANG ; DONG WU ; TAO MEI**. Boosting video representation learning with multi-faceted integration. *IEEE Conference on Computer Vision and Pattern Recognition*, 2021
- **MENGMENG WANG ; JIAZHENG XING ; YONG LIU**. Action-CLIP: A new paradigm for video action recognition.. *arXiv preprint arXiv:2109.08472*, 2021
- **JIE LEI ; LINJIE LI ; LUOWEI ZHOU ; ZHE GAN ; TAMARA L BERG ; MOHIT BANSAL ; JINGJING LIU.** Less is more: Clipbert for video-and-language learning via sparse sampling.. *IEEE Conference on Computer Vision and Pattern Recognition*, 2021
- **MAX BAIN ; ARSHA NAGRANI ; G ¨UL VAROL ; ANDREW ZISSERMAN.** Frozen in time: A joint video and image encoder for end-to-end retrieval.. *IEEE International Conference on Computer Vision*, 2021
- **KEVAL DOSHI ; YASIN YILMAZ.** Zero-shot action recognition with transformerbased video semantic embedding.. *arXiv preprint arXiv:2203.05156*, 2022
- **YUYING GE ; YIXIAO GE ; XIHUI LIU ; DIAN LI ; YING SHAN ; XIAOHU QIE ; PING LUO.** Bridging video-text retrieval with multiple choice questions.. *IEEE Conference on Computer Vision and Pattern Recognition*, 2022
- **SHI PU ; KAILI ZHAO ; MAO ZHENG.** Alignment-uniformity aware representation learning for zero-shot video classification.. *IEEE Conference on Computer Vision and Pattern Recognition*, 2022
- **CHUNG-CHING LIN ; KEVIN LIN ; LIJUAN WANG ; ZICHENG LIU ; LINJIE LI.** Crossmodal representation learning for zero-shot action recognition.. *IEEE Conference on Computer Vision and Pattern Recognition*, 2022
- **HIEU PHAM ; ZIHANG DAI ; GOLNAZ GHIASI ; KENJI KAWAGUCHI ; HANXIAO LIU ; ADAMS WEI YU ; JIAHUI YU ; YI-TING CHEN ; MINH-THANG LUONG ; YONGHUI WU et al.** Combined scaling for zero-shot transfer learning.. *arXiv preprint arXiv:2111.10050*, 2021

- **JI LIN** ; **CHUANG GAN** ; **SONG HAN.** TSM: Temporal shift module for efficient video understanding.. *IEEE International Conference on Computer Vision*, 2019
- **GEDAS BERTASIUS** ; **HENG WANG** ; **LORENZO TORRESANI.** Is space-time attention all you need for video understanding?. *International Conference on Machine Learning*, August 2021
- **ZE LIU** ; **JIA NING** ; **YUE CAO** ; **YIXUAN WEI** ; **ZHENG ZHANG** ; **STEPHEN LIN** ; **HAN HU.** Video swin transformer.. *IEEE Conference on Computer Vision and Pattern Recognition*, 2022
- **VIJAYAKUMAR, A.K.** ; **COGSWELL, M.** ; **SELVARAJU, R.R.** ; **SUN, Q.** ; **LEE, S.** ; **CRANDALL, D.** ; **BATRA, D.** Diverse beam search: Decoding diverse solutions from neural sequence models.. *arXiv preprint arXiv:1610.02424*, 2016
- **DOSOVITSKIY, A.** ; **BEYER, L.** ; **KOLESNIKOV, A.** ; **WEISSENBORN, D.** ; **ZHAI, X.** ; **UNTERTHINER, T.** ; **DEHGHANI, M.** ; **MINDERER, M.** ; **HEIGOLD, G.** ; **GELLY, S. et al.** An image is worth 16x16 words: Transformers for image recognition at scale.. *International Conference on Learning Representations*, 2021
- **LOSHCHILOV, I.** ; **HUTTER, F.** Decoupled weight decay regularization.. *arXiv preprint arXiv:1711.05101*, 2017
- **LOSHCHILOV, I** ; **HUTTER, F.** Sgdr: Stochastic gradient descent with warm restarts.. *arXiv preprint arXiv:1608.03983*, 2016
- **XU, J.** ; **MEI, T.** ; **YAO, T.** ; **RUI, Y.** MSR-VTT: A large video description dataset for bridging video and language.. *IEEE Conference on Computer Vision and Pattern Recognition*, 2016
- **CHEN, D.** ; **DOLAN, W.B.** Collecting highly parallel data for paraphrase evaluation.. *Annual meeting of the association for computational linguistics: human language technologies*, 2011
- **ANNE HENDRICKS, L.** ; **WANG, O.** ; **SHECHTMAN, E.** ; **SIVIC, J.** ; **DARRELL, T.** ; **RUSSELL, B.** Localizing moments in video with natural language.. *IEEE International Conference on Computer Vision*, 2017
- **GU, C.** ; **SUN, C.** ; **ROSS, D.A.** ; **VONDRICK, C.** ; **PANTOFARU, C.** ; **LI, Y.** ; **VIJAYANARASIMHAN, S.** ; **TODERICI, G.** ; **RICCO, S.** ; **SUKTHANKAR, R. et al.** AVA: A video dataset of spatio-temporally localized atomic visual actions. *IEEE Conference on Computer Vision and Pattern Recognition*, 2018
- **MATERZYNSKA, J.** ; **XIAO, T.** ; **HERZIG, R.** ; **XU, H.** ; **WANG, X** ; **DARRELL, T.** Something-else: Compositional action recognition with spatial-temporal interaction networks. *IEEE Conference on Computer Vision and Pattern Recognition*, 2020
- **SIGURDSSON, G.A.** ; **GUPTA, A.** ; **SCHMID, C.** ; **FARHADI, A.** ; **ALAHARI, K.** Charadesego: A large-scale dataset of paired third and first person videos.. *arXiv preprint arXiv:1804.09626*, 2018